(19) Europäisches Patentamt
European Patent Office
Office européen des brevets

(11) EP 4 339 224 B1

(12) EUROPEAN PATENT SPECIFICATION

(45) Date of publication and mention of the grant of the patent:
**24.06.2026 Bulletin 2026/26**

(21) Application number: **23775155.7**

(22) Date of filing: **08.02.2023**

(51) International Patent Classification (IPC):
***C08G 64/16*** (2006.01) ***C08G 64/30*** (2006.01)
***C08L 69/00*** (2006.01) ***G02B 1/04*** (2006.01)

(52) Cooperative Patent Classification (CPC):
(C-Sets available)
**G02B 1/041; C08G 64/16; C08G 64/305** (Cont.)

(86) International application number:
**PCT/KR2023/001849**

(87) International publication number:
**WO 2023/182652 (28.09.2023 Gazette 2023/39)**

# (54) POLYCARBONATE RESIN AND METHOD FOR PREPARING SAME

POLYCARBONATHARZ UND VERFAHREN ZUR HERSTELLUNG DAVON

RÉSINE DE POLYCARBONATE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.03.2022 KR 20220035977**

(43) Date of publication of application:
**20.03.2024 Bulletin 2024/12**

(73) Proprietor: **LG Chem, Ltd.**
**Seoul 07336 (KR)**

(72) Inventors:
- **CHOI, Il Hwan**
**Daejeon 34122 (KR)**
- **KIM, Kyeongmun**
**Daejeon 34122 (KR)**
- **YIM, Hye Jin**
**Daejeon 34122 (KR)**
- **BAE, Jaesoon**
**Daejeon 34122 (KR)**
- **BAEK, Jonghwa**
**Daejeon 34122 (KR)**
- **SHIN, Hyeonah**
**Daejeon 34122 (KR)**
- **JUNG, Min Suk**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 677 614**
**CN-A- 112 250 852**
**CN-A- 112 250 852**
**JP-A- 2020 117 610**
**JP-A- 2020 117 610**
**JP-A- H06 214 408**
**KR-A- 20190 140 074**
**KR-A- 20200 067 893**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**G02B 1/041, C08L 69/00**

## Description

[Technical Field]

This application claims priority to and the benefit of Korean Patent Application No. 10-2022-0035977 filed in the Korean Intellectual Property Office on March 23, 2022.

The present specification relates to a polycarbonate resin and a preparation method thereof.

[Background Art]

The higher the refractive index of an optical material, the thinner the optical lens required to achieve the same level of correction. Accordingly, as the refractive index of the optical material is increased, a thinner and lighter lens can be manufactured, so that it is possible to make various devices, where lenses are used, smaller.

Generally, when the refractive index of an optical material is increased, there is a problem in that the Abbe's Number becomes low, and for use as an optical material, a certain level or higher of transparency is required.

JP2020117610 A discloses a thermoplastic resin to produce an optical lens which a polycarbonate having a fluorene skeleton.

EP 3 677 614 A1 describes a thermosetting resin represented by the following formula

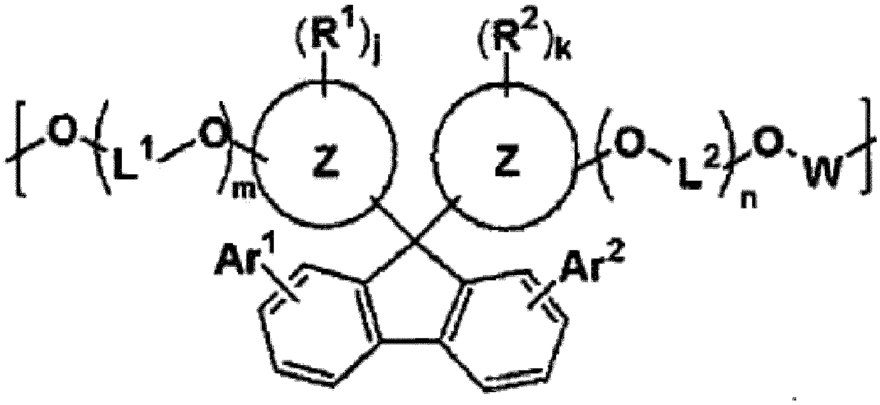

wherein the rings Z represent (the same or different) aromatic hydrocarbon rings, $R^1$ and $R^2$ each independently represent a hydrogen atom, a halogen atom or a hydrocarbon group of 1 to 12 carbon atoms optionally containing an aromatic group, $Ar^1$ and $Ar^2$ represent an aromatic group of 6 to 10 carbon atoms optionally containing a substituent, $L_1$ and $L_2$ each independently represent a divalent linking group, j and k each independently represent an integer of 0 or greater, m and n each independently represent 0 or 1, and W is at least one group selected from groups represented by the following formulae:

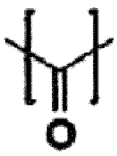

and

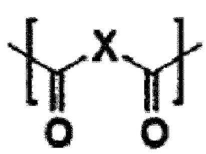

wherein X represents a divalent linking group. Resin materials are also described in CN 112 250 852 A, which describes a resin having repeating units as illustrated by the following formula:

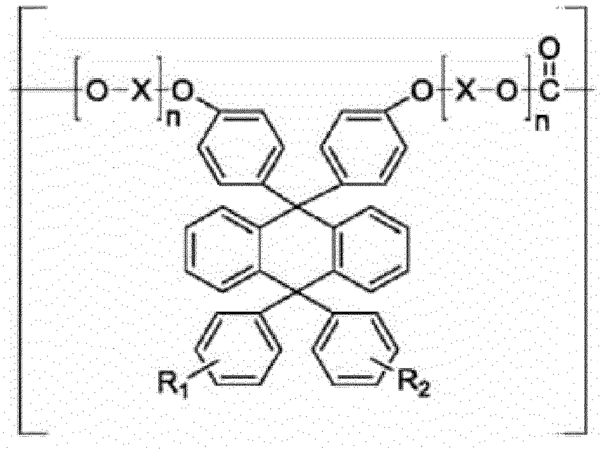

[Detailed Description of the Invention]

[Technical Problem]

An exemplary embodiment of the present specification has been made in an effort to provide a polycarbonate resin having a novel structure and a preparation method thereof.

Another exemplary embodiment of the present specification has been made in an effort to provide a polycarbonate resin composition including a polycarbonate resin having a novel structure and a molded article prepared from the polycarbonate resin composition.

[Technical Solution]

Provided is s a polycarbonate resin including a unit of the following Chemical Formula 1.

[Chemical Formula 1]

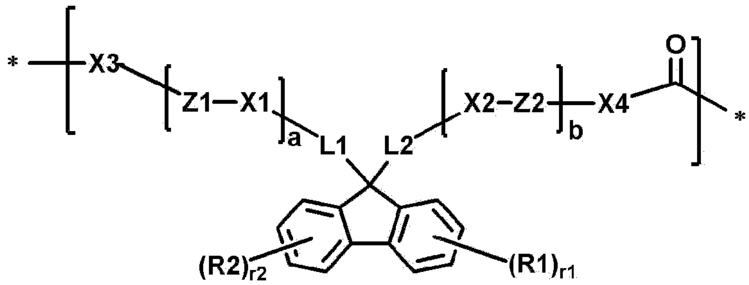

In Chemical Formula 1,

R1 and R2 are different from each other, and are each independently hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; an aryl group which is unsubstituted or substituted with deuterium, a halogen group, a hydroxyl group, a cyano group, an alkyl group, a cycloalkyl group, an alkoxy group, an alkenyl group, an aryloxy group, an arylthio group, an alkylthio group, an aryl group, or a heteroaryl group; or a substituted or unsubstituted heteroaryl group,
r1 and r2 are each an integer from 1 to 4, and when r1 is 2 or higher, two or more R1's are the same as or different from each other, and when r2 is 2 or higher, two or more R2's are the same as or different from each other,
L1 and L2 are the same as or different from each other, and are each independently a substituted or unsubstituted arylene group,
X1 and X2 are the same as or different from each other, and are each independently O; or S,
X3 is O,
X4 is O,
Z1 and Z2 are the same as or different from each other, and are each independently a substituted or unsubstituted

alkylene group; or a substituted or unsubstituted cycloalkylene group,
a and b are the same as or different from each other, and are each independently an integer from 1 to 10, and when a and b are each 2 or higher, structures in each parenthesis are the same as or different from each other, and
* means a moiety linked to the main chain of the resin.

An exemplary embodiment of the present specification provides a method for preparing a polycarbonate resin, the method including: polymerizing a composition for preparing the polycarbonate resin, which includes a compound of the following Chemical Formula 1a; and a polycarbonate precursor.

[Chemical Formula 1a]

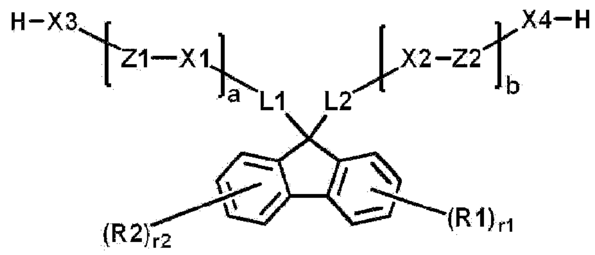

In Chemical Formula 1a,

R1 and R2 are different from each other, and are each independently hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; an aryl group which is unsubstituted or substituted with deuterium, a halogen group, a hydroxyl group, a cyano group, an alkyl group, a cycloalkyl group, an alkoxy group, an alkenyl group, an aryloxy group, an arylthio group, an alkylthio group, an aryl group, or a heteroaryl group; or a substituted or unsubstituted heteroaryl group,
r1 and r2 are each an integer from 1 to 4, and when r1 is 2 or higher, two or more R1's are the same as or different from each other, and when r2 is 2 or higher, two or more R2's are the same as or different from each other,
L1 and L2 are the same as or different from each other, and are each independently a substituted or unsubstituted arylene group,
X1 and X2 are the same as or different from each other, and are each independently O; or S,
X3 is O,
X4 is O,
Z1 and Z2 are the same as or different from each other, and are each independently a substituted or unsubstituted alkylene group; or a substituted or unsubstituted cycloalkylene group, and
a and b are the same as or different from each other, and are each independently an integer from 1 to 10, and when a and b are each 2 or higher, structures in each parenthesis are the same as or different from each other.

Another exemplary embodiment of the present specification provides a polycarbonate resin composition including the polycarbonate resin according to the above-described exemplary embodiment.
Still another exemplary embodiment of the present specification provides a molded article including the polycarbonate resin composition according to the above-described exemplary embodiment.

[Advantageous Effects]

The polycarbonate resin according to the exemplary embodiments of the present specification has a high refractive index and high transparency.
By using the polycarbonate resin according to the exemplary embodiments of the present specification, an excellent optical lens, optical film, optical thin film, or optical resin having a small thickness can be obtained.

[Brief Description of Drawings]

FIG. 1 is a view illustrating the reduction rate of lens thickness depending on the difference in refractive index.

[Best Mode]

Hereinafter, the present specification will be described in more detail.

For a polycarbonate resin including the unit of Chemical Formula 1 according to an exemplary embodiment of the present specification, from the relationship formula between the molecular structure and the refractive index, which is known by the Lorentz-Lorenz's formula, it can be seen that the refractive index of a material composed of molecules is increased by increasing the electron density of the molecule and reducing the molecular volume. Further, since the substituents of the benzene rings on both sides of the fluorene structure of Chemical Formula 1 form an asymmetric structure and R1 and R2 are included as substituents, the refractive index of a molded article including the polycarbonate resin may be improved by increasing the electron density. Therefore, the polycarbonate resin according to an exemplary embodiment of the present specification has a high refractive index and high transparency, and an optical lens, an optical film, or an optical resin using the polycarbonate resin has a small thickness and may exhibit excellent optical characteristics.

Throughout the specification of the present application, the term "combination thereof" included in the Markush type expression means a mixture or combination of one or more selected from the group consisting of constituent elements described in the Markush type expression, and means including one or more selected from the group consisting of the above-described constituent elements.

In the present specification,

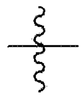

means a moiety to be linked.

In the present specification, the term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or more substituents selected from the group consisting of deuterium; a halogen group; a hydroxyl group; a cyano group; an alkyl group; a cycloalkyl group; an alkoxy group; an alkenyl group; an aryloxy group; an arylthio group; alkylthio group; a silyl group; an aryl group; a condensed ring group of an aromatic hydrocarbon ring and an aliphatic hydrocarbon ring; and a heteroaryl group, being substituted with a substituent to which two or more substituents among the exemplified substituents are linked, or having no substituent.

In the present specification, the fact that two or more substituents are linked indicates that hydrogen of any one substituent is linked to another substituent. For example, when two substituents are linked to each other, a phenyl group and a naphthyl group may be linked to each other to become a substituent of

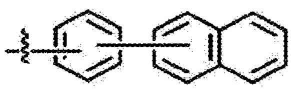

or

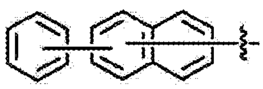

.

Further, the case where three substituents are linked to one another includes not only a case where (Substituent 1)-(Substituent 2)-(Substituent 3) are consecutively linked to one another, but also a case where (Substituent 2) and (Substituent 3) are linked to (Substituent 1). For example, a phenyl group, a naphthyl group , and an isopropyl group may be linked to one another to form a substituent of

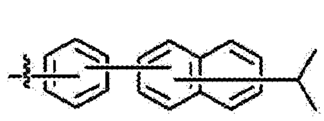, 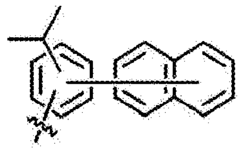,

or

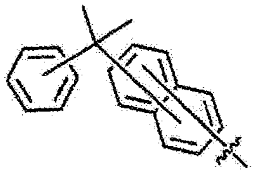.

The above-described definition also applies equally to the case where four or more substituents are linked to one another.

In the present specification, examples of a halogen group include fluorine, chlorine, bromine or iodine.

In the present specification, an alkyl group may be straight-chained or branched, and the number of carbon atoms thereof is not particularly limited, but is preferably 1 to 30. Specific examples thereof include a methyl group, an ethyl group, a propyl group, an n-propyl group, an isopropyl group, a butyl group, an n-butyl group, an isobutyl group, a tert-butyl group, a sec-butyl group, a 1-methyl-butyl group, a 1-ethyl-butyl group, a pentyl group, an n-pentyl group, an isopentyl group, a neopentyl group, a tert-pentyl group, a hexyl group, an n-hexyl group, a 1-methylpentyl group, a 2-methylpentyl group, a 4-methyl-2-pentyl group, a 3,3-dimethylbutyl group, a 2-ethylbutyl group, a heptyl group, an n-heptyl group, a 1-methylhexyl group, a cyclopentylmethyl group, a cyclohexylmethyl group, an octyl group, an n-octyl group, a tert-octyl group, a 1-methylheptyl group, a 2-ethylhexyl group, a 2-propylpentyl group, an n-nonyl group, a 2,2-dimethylheptyl group, a 1-ethyl-propyl group, a 1,1-dimethyl-propyl group, an isohexyl group, a 4-methylhexyl group, a 5-methylhexyl group, and the like, but are not limited thereto.

In the present specification, a cycloalkyl group is not particularly limited, but has preferably 3 to 30 carbon atoms, and specific examples thereof include a cyclopropyl group, a cyclobutyl group, a cyclopentyl group, a 3-methylcyclopentyl group, a 2,3-dimethylcyclopentyl group, a cyclohexyl group, a 3-methylcyclohexyl group, a 4-methylcyclohexyl group, a 2,3-dimethylcyclohexyl group, a 3,4,5-trimethylcyclohexyl group, a 4-tert-butylcyclohexyl group, a cycloheptyl group, a cyclooctyl group, an adamantyl group, and the like, but are not limited thereto.

In the present specification, an alkoxy group may be straight-chained, branched, or cyclic. The number of carbon atoms of the alkoxy group is not particularly limited, but is preferably 1 to 30. Specific examples thereof include a methoxy group, an ethoxy group, an n-propoxy group, an isopropoxy group, an n-butoxy group, an isobutoxy group, a tert-butoxy group, a sec-butoxy group, an n-pentyloxy group, an neopentyloxy group, an isopentyloxy group, an n-hexyloxy group, a 3,3-dimethylbutyloxy group, a 2-ethylbutyloxy group, an n-octyloxy group, an n-nonyloxy group, an n-decyloxy group, a benzyloxy group, a p-methylbenzyloxy group, and the like, but are not limited thereto.

In the present specification, an alkenyl group may be straight-chained or branched, and the number of carbon atoms thereof is not particularly limited, but is preferably 2 to 30. Specific examples thereof include a vinyl group, a 1-propenyl group, an isopropenyl group, a 1-butenyl group, a 2-butenyl group, a 3-butenyl group, a 1-pentenyl group, a 2-pentenyl group, a 3-pentenyl group, a 3-methyl-1-butenyl group, a 1,3-butadienyl group, an allyl group, a 1-phenylvinyl-1-yl group, a 2-phenylvinyl-1-yl group, a 2,2-diphenylvinyl-1-yl group, a 2-phenyl-2-(naphthyl-1-yl)vinyl-1-yl group, a 2,2-bis(diphenyl-1-yl)vinyl-1-yl group, a stilbenyl group, a styrenyl group, and the like, but are not limited thereto.

In the present specification, an aryl group is not particularly limited, but has preferably 6 to 50 carbon atoms, and the aryl group may be monocyclic or polycyclic.

When the aryl group is a monocyclic aryl group, the number of carbon atoms thereof is not particularly limited, but is preferably 6 to 30. Specific examples of the monocyclic aryl group include a phenyl group, a biphenyl group, a terphenyl group, and the like, but are not limited thereto.

When the aryl group is a polycyclic aryl group, the number of carbon atoms thereof is not particularly limited, but is preferably 10 to 50. Specific examples of the polycyclic aryl group include a naphthyl group, an anthracene group, a phenanthrene group, a triphenylene group, a pyrene group, a phenalene group, a perylene group, a chrysene group, a fluorene group, and the like, but are not limited thereto.

In the present specification, the fluorene group may be substituted, and adjacent groups may be bonded to each other to form a ring.

Examples of the case where the fluorene group is substituted include

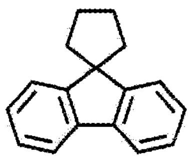 , 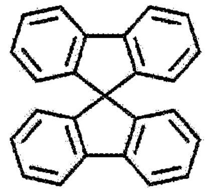 ,

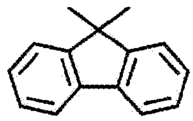 , 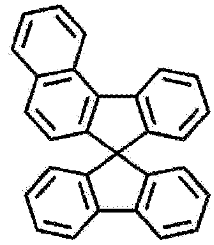 , 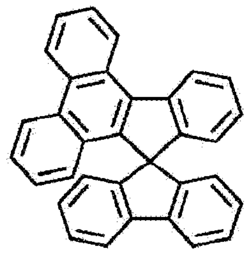 ,

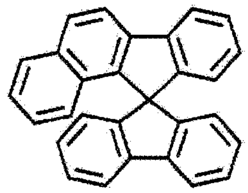 , 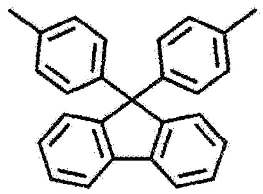 , 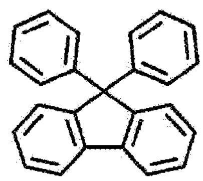 ,

and the like, but are not limited thereto.

In the present specification, the "adjacent" group may mean a substituent substituted with an atom directly linked to an atom in which the corresponding substituent is substituted, a substituent disposed to be sterically closest to the corresponding substituent, or another substituent substituted with an atom in which the corresponding substituent is substituted. For example, two substituents substituted at the ortho position in a benzene ring and two substituents substituted with the same carbon in an aliphatic ring may be interpreted as groups which are "adjacent" to each other.

In the present specification, a heteroaryl group includes one or more atoms other than carbon, that is, one or more heteroatoms, and specifically, the heteroatom may include one or more atoms selected from the group consisting of O, N, Se, S, and the like. The number of carbon atoms thereof is not particularly limited, but is preferably 2 to 30, and the heteroaryl group may be monocyclic or polycyclic. Examples of the heteroaryl group include a thiophene group, a furan group, a pyrrole group, an imidazole group, a thiazole group, an oxazole group, an oxadiazole group, a pyridine group, a bipyridine group, a pyrimidine group, a triazine group, a triazole group, an acridine group, a pyridazine group, a pyrazine group, a quinoline group, a quinazoline group, a quinoxaline group, a phthalazine group, a pyridopyrimidine group, a pyridopyrazine group, a pyrazinopyrazine group, an isoquinoline group, an indole group, a carbazole group, a benzoxazole group, a benzimidazole group, a benzothiazole group, a benzocarbazole group, a benzothiophene group, a dibenzothiophene group, a benzofuran group, a phenanthridine group, a phenanthroline group, an isoxazole group, a thiadiazole group, a dibenzofuran group, a dibenzosilole group, a phenoxathiin group, a phenoxazine group, a phenothiazine group, a dihydroindenocarbazole group, a spirofluorenexanthene group, a spirofluorenethioxanthene group, a tetrahydronaphthothiophene group, a tetrahydronaphthofuran group, a tetrahydrobenzothiophene group, a tetrahydrobenzofuran group, and the like, but are not limited thereto.

In the present specification, the silyl group may be an alkylsilyl group, an arylsilyl group, an alkylarylsilyl group, a heteroarylsilyl group, and the like. The above-described examples of the alkyl group may be applied to the alkyl group in the alkylsilyl group, the above-described examples of the aryl group may be applied to the aryl group in the arylsilyl group, the examples of the alkyl group and the aryl group may be applied to the alkyl group and the aryl group in the alkylarylsilyl group, and the examples of the heteroaryl group may be applied to the heteroaryl group in the heteroarylsilyl group.

In the present specification, a hydrocarbon ring group may be an aromatic hydrocarbon ring group, an aliphatic hydrocarbon ring group, or a condensed ring group of an aromatic hydrocarbon ring and an aliphatic hydrocarbon ring and may be selected among examples of the cycloalkyl group, the aryl group, and a combination thereof, and examples of the hydrocarbon ring group include a phenyl group, a cyclohexyl group, an adamantyl group, a bicyclo[2.2.1]heptyl group, a bicyclo[2.2.1]octyl group, a tetrahydronaphthalene group, a tetrahydroanthracene group, a 1,2,3,4-tetrahydro-1,4-methanonaphthalene group, a 1,2,3,4-tetrahydro-1,4-ethanonaphthalene group, a spirocyclopentanefluorene group,

a spiroadamantanefluorene group, a spirocyclohexanefluorene group, and the like, but are not limited thereto.

In the present specification, the aryloxy group may be represented by -ORo, and the description on the above-described aryl group is applied to Ro.

In the present specification, the arylthio group may be represented by -SRs1, and the description on the above-described aryl group is applied to Rs1.

In the present specification, the alkylthio group may be represented by -SRs2, and the description on the above-described alkyl group is applied to Rs2.

In the present specification, an alkylene group means a group having two bonding positions in an alkyl group, that is, a divalent group. The above-described description on the alkyl group may be applied to the alkylene group, except for a divalent alkylene group.

In the present specification, the cycloalkylene group means a group having two bonding positions in a cycloalkyl group, that is, a divalent group. The above-described description on the cycloalkyl group may be applied to the cycloalkylene groups, except for a divalent cycloalkylene group.

In the present specification, an arylene group means a group having two bonding positions in an aryl group, that is, a divalent group. The above-described description on the aryl group may be applied to the arylene group, except for a divalent arylene group.

In the present specification, a divalent condensed ring group of an aromatic hydrocarbon ring and an aliphatic hydrocarbon ring means a group having two bonding positions in the condensed ring group of the aromatic hydrocarbon ring and the aliphatic hydrocarbon ring, that is, a divalent group. The above-described description on the condensed ring group of the aromatic hydrocarbon ring and the aliphatic hydrocarbon ring may be applied, except that the groups are each a divalent group.

According to an exemplary embodiment of the present specification, the polycarbonate resin further includes a unit of the following Chemical Formula 2.

[Chemical Formula 2]

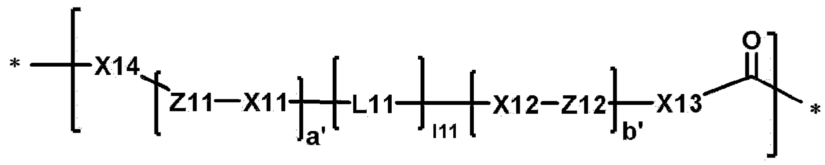

In Chemical Formula 2,

L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11's are the same as or different from each other,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group,
a' and b' are the same as or different from each other, and are each independently an integer from 0 to 10, and when a' and b' are each 2 or higher, structures in each parenthesis are the same as or different from each other, and
* means a moiety linked to the main chain of the resin.

By further including the unit represented by Chemical Formula 2, the polycarbonate resin may supplement the glass transition temperature (Tg) of the unit of Chemical Formula 1 or make the chain behavior of the unit of Chemical Formula 1 flexible, and has a technical effect advantageous for the injection processing of a molded article.

An exemplary embodiment of the present specification provides a polycarbonate resin including the unit of Chemical Formula 1; and the unit of Chemical Formula 2.

According to an exemplary embodiment of the present specification, r1 is 1.

According to an exemplary embodiment of the present specification, Chemical Formula 1 is any one of the following Chemical Formulae 1-1 to 1-4.

[Chemical Formula 1-1]

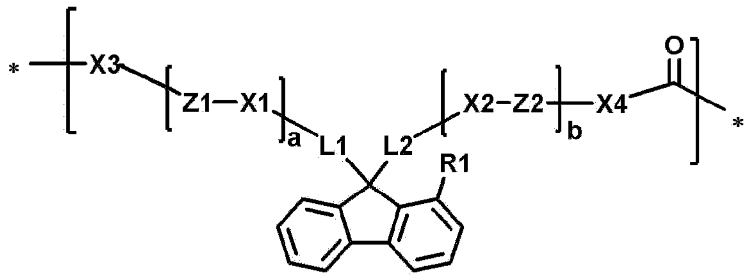

[Chemical Formula 1-2]

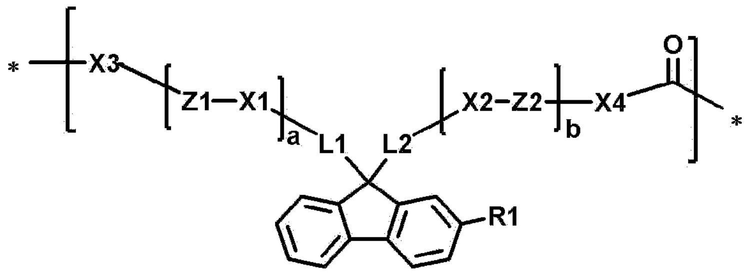

[Chemical Formula 1-3]

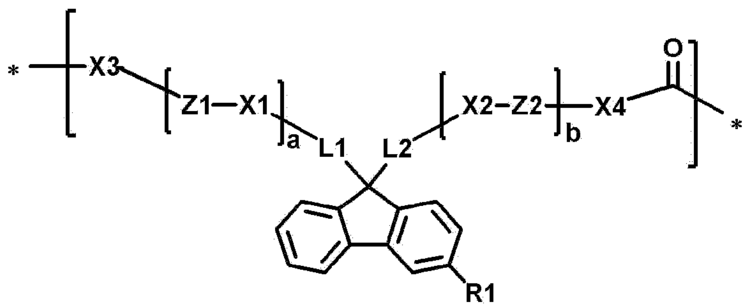

[Chemical Formula 1-4]

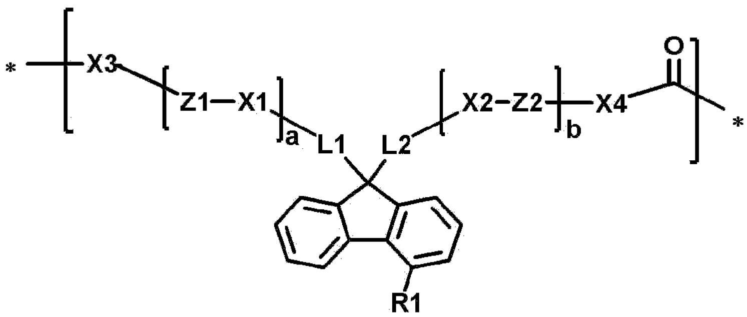

In Chemical Formulae 1-1 to 1-4,

the definitions of Z1, Z2, X1 to X4, a, b, L1, L2, and R1 are the same as those defined in Chemical Formula 1.

According to an exemplary embodiment of the present specification, R1 and R2 are different from each other, and

are each independently hydrogen; or an unsubstituted monocyclic or polycyclic aryl group having 6 to 30 carbon atoms, L1 and L2 are the same as or different from each other, and are each independently a monocyclic or polycyclic arylene group having 6 to 30 carbon atoms, X1 to X4 are O, and Z1 and Z2 are the same as or different from each other, and are each independently a straight-chained or branched alkylene group having 1 to 30 carbon atoms.

According to an exemplary embodiment of the present specification, R1 and R2 are different from each other, and are each independently hydrogen; or an unsubstituted monocyclic or polycyclic aryl group having 6 to 30 carbon atoms.

According to an exemplary embodiment of the present specification, R1 and R2 are different from each other, and are each independently hydrogen; or an unsubstituted monocyclic or polycyclic aryl group having 6 to 20 carbon atoms.

According to an exemplary embodiment of the present specification, R1 and R2 are different from each other, and are each independently hydrogen; or an unsubstituted polycyclic aryl group having 10 to 30 carbon atoms.

According to an exemplary embodiment of the present specification, R1 and R2 are different from each other, and are each independently hydrogen; or an unsubstituted polycyclic aryl group having 10 to 20 carbon atoms.

According to an exemplary embodiment of the present specification, R1 and R2 are different from each other, and are each independently hydrogen; or a naphthyl group. According to an exemplary embodiment of the present specification, R1 is a naphthyl group.

According to an exemplary embodiment of the present specification, R2 is hydrogen.

According to an exemplary embodiment of the present specification, L1 and L2 are the same as or different from each other, and are each independently a monocyclic or polycyclic arylene group having 6 to 30 carbon atoms.

According to an exemplary embodiment of the present specification, L1 and L2 are the same as or different from each other, and are each independently a monocyclic or polycyclic arylene group having 6 to 20 carbon atoms.

According to an exemplary embodiment of the present specification, L1 and L2 are the same as or different from each other, and are each independently a polycyclic arylene group having 10 to 30 carbon atoms.

According to an exemplary embodiment of the present specification, L1 and L2 are the same as or different from each other, and are each independently a polycyclic arylene group having 10 to 20 carbon atoms.

According to an exemplary embodiment of the present specification, L1 and L2 are a divalent naphthalene group.

According to an exemplary embodiment of the present specification, X1 is O.

According to an exemplary embodiment of the present specification, X2 is O.

According to an exemplary embodiment of the present specification, Z1 and Z2 are the same as or different from each other, and are each independently a straight-chained or branched alkylene group having 1 to 30 carbon atoms.

According to an exemplary embodiment of the present specification, Z1 and Z2 are the same as or different from each other, and are each independently a straight-chained or branched alkylene group having 1 to 20 carbon atoms.

According to an exemplary embodiment of the present specification, Z1 and Z12 are an ethylene group.

According to an exemplary embodiment of the present specification, a is 1.

According to an exemplary embodiment of the present specification, b is 1.

According to an exemplary embodiment of the present specification, a is 0.

According to an exemplary embodiment of the present specification, b is 0.

According to an exemplary embodiment of the present specification, L11 is a straight-chained or branched alkylene group having 1 to 30 carbon atoms; a condensed ring group of a divalent monocyclic or polycyclic aromatic hydrocarbon ring having 6 to 30 carbon atoms and an aliphatic hydrocarbon ring having 3 to 30 carbon atoms; or a monocyclic or polycyclic arylene group having 6 to 50 carbon atoms, which is unsubstituted with or substituted with a straight-chained or branched alkyl group having 1 to 30 carbon atoms or a monocyclic or polycyclic aryl group having 6 to 30 carbon atoms.

According to an exemplary embodiment of the present specification, L11 is a straight-chained or branched alkylene group having 1 to 20 carbon atoms; a condensed ring group of a divalent monocyclic or polycyclic aromatic hydrocarbon ring having 6 to 20 carbon atoms and an aliphatic hydrocarbon ring having 3 to 20 carbon atoms; or a monocyclic or polycyclic arylene group having 6 to 30 carbon atoms, which is unsubstituted with or substituted with a straight-chained or branched alkyl group having 1 to 20 carbon atoms or a monocyclic or polycyclic aryl group having 6 to 20 carbon atoms.

According to an exemplary embodiment of the present specification, L11 is a methylene group which is unsubstituted or substituted with a methyl group; an isopropylene group; a phenylene group which is unsubstituted or substituted with a methyl group or a phenyl group; a divalent naphthalene group; or a divalent fluorene group.

According to an exemplary embodiment of the present specification, l11 is 1.

According to an exemplary embodiment of the present specification, l11 is 2, and two L11's are the same as or different from each other.

According to an exemplary embodiment of the present specification, l11 is 3, and three L11's are the same as or different from each other.

According to an exemplary embodiment of the present specification, X11 is O.

According to an exemplary embodiment of the present specification, X12 is O.

According to an exemplary embodiment of the present specification, X13 is O.

According to an exemplary embodiment of the present specification, X14 is O.

According to an exemplary embodiment of the present specification, Z11 and Z12 are the same as or different from each other, and are each independently a straight-chained or branched alkylene group having 1 to 30 carbon atoms.

According to an exemplary embodiment of the present specification, Z11 and Z12 are the same as or different from each other, and are each independently a straight-chained or branched alkylene group having 1 to 20 carbon atoms.

According to an exemplary embodiment of the present specification, Z11 and Z12 are an ethylene group.

According to an exemplary embodiment of the present specification, a' is 1.

According to an exemplary embodiment of the present specification, b' is 1.

According to an exemplary embodiment of the present specification, a' is 0.

According to an exemplary embodiment of the present specification, b' is 0.

According to an exemplary embodiment of the present specification, the polycarbonate resin may each have -OH; - SH; $-CO_2CH_3$; -Cl; or $-OC_6H_5$ as both end groups.

In an exemplary embodiment of the present specification, the polycarbonate resin has a weight average molecular weight of 5,000g/mol to 500,000 g/mol, preferably 8,000 g/mol to 400,000 g/mol, 10,000 g/mol to 350,000 g/mol, 11,000 g/mol to 300,000 g/mol. The polycarbonate resin has a weight average molecular weight of more preferably 12,000 g/mol to 250,000 g/mol, 13,000 g/mol to 200,000 g/mol, 14,000 g/mol to 150,000 g/mol, and 15,000 g/mol to 100,000 g/mol.

In an exemplary embodiment of the present invention, the polycarbonate resin has a number average molecular weight of 2,000 g/mol to 300,000 g/mol, 4,000 g/mol to 250,000 g/mol, 5,000 g/mol to 210,000 g/mol, 6,000 g/mol to 180,000 g/mol, 6,500 g/mol to 150,000 g/mol, 7,000g/mol to 120,000 g/mol, 7,000g/mol to 90,000 g/mol, and preferably 8,000 g/mol to 60,000 g/mol.

When the polycarbonate resin satisfies the above-described weight average molecular weight range and number average molecular weight range, the polycarbonate resin may have optimum fluidity and processability.

In the present specification, the weight average molecular weights (Mws) of the polycarbonate resin and the oligomer used in the preparation thereof may be measured by gel permeation chromatograph (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the measurement temperature is 40°C, the used solvent is tetrahydrofuran (THF), and the flow rate is 1 mL/min. The sample of the polycarbonate resin or oligomer is each prepared at a concentration of 10 mg/10 mL, and then fed in an amount of 10 μL, and the weight average molecular weight (Mw) value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

In an exemplary embodiment of the present specification, the polycarbonate resin may have a glass transition temperature (Tg) of 90°C to 200°C. Alternatively, the glass transition temperature may be 110°C to 190°C. The glass transition temperature may be preferably, 100°C to 190°C, or 120°C to 180°C, and specifically 126.3°C to 178.4°C. When the polycarbonate resin satisfies the above glass transition temperature range, the glass transition temperature is easily adjusted when a polycarbonate resin composition is prepared by mixing with a resin having excellent heat resistance and injectability and having a glass transition temperature different from the above-described range, so that the physical properties desired in the present specification may be satisfied.

The glass transition temperature (Tg) may be measured by a differential scanning calorimeter (DSC). Specifically, the glass transition temperature may be measured from a graph obtained by heating 5.5 mg to 8.5 mg of the polycarbonate resin sample to 270°C under a nitrogen atmosphere, and then scanning the resin sample while heating the resin sample at a heating rate of 10°C/min during the second heating after cooling.

In an exemplary embodiment of the present specification, a refractive index of the polycarbonate resin, which is measured at a wavelength of 587 nm, is 1.50 to 1.75. The refractive index may be preferably 1.64 to 1.712, and more preferably 1.6456 to 1.7015. When the resin satisfies the above refractive index, a thin and light optical lens can be manufactured when the resin is applied to a molded article such as an optical lens.

In an exemplary embodiment of the present specification, the Abbe's Number of the resin, which is measured and calculated at a wavelength of 486, 587, and 656 nm may be 5 to 45. The Abbe's Number may be preferably 10 to 25, and more preferably 15 to 23, or 15.0 to 21.3. When the resin satisfies the above Abbe's Number range, there is an effect that the dispersion is decreased and the sharpness is increased when the resin is applied to a molded product such as an optical lens. The Abbe's Number may specifically be obtained by the following Equation by measuring the refractive index ($n_D$, $n_F$, and $n_C$) at a wavelength of D (587 nm), F (486 nm), and C (656 nm), respectively at 20°C.

$$\text{Abbe's Number} = (n_D - 1)/(n_F - n_C)$$

The refractive index can be measured by the prism coupler method, and for example SPA-3DR manufactured by

SAIRON Technology Inc. may be used, but is not limited thereto.

The refractive index of the resin may be calculated by measuring the change in the amount of light reflected from a prepared sample in which the resin is made to be flat by placing a slide glass on a heating plate at 200°C, using a prism coupler. When the prepared sample is brought into contact with the prism, and then the laser is incident on the prism, most of the incident laser is totally reflected, but when specific incident angle and conditions are satisfied, light is coupled because an evanescent field is generated at the boundary surface. By measuring an angle at which coupling occurs, and as a result, the intensity of the light detected by a detector sharply decreases, the refractive index of the film can be automatically calculated by the prism coupler from the parameters related to the polarization mode of light and the refractive indices of the prism and the substrate.

An exemplary embodiment of the present invention provides a method for preparing a polycarbonate resin, the method including: polymerizing a composition for preparing the polycarbonate resin, which includes a compound of the following Chemical Formula 1a; and a polycarbonate precursor.

[Chemical Formula 1a]

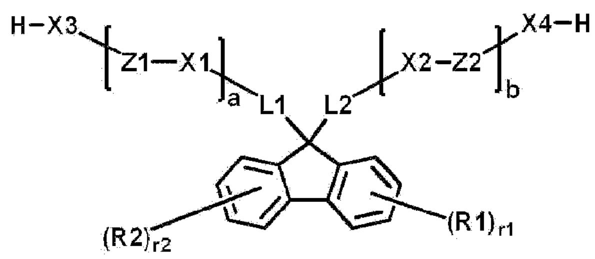

In Chemical Formula 1a,

R1 and R2 are different from each other, and are each independently hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; an aryl group which is unsubstituted or substituted with deuterium, a halogen group, a hydroxyl group, a cyano group, an alkyl group, a cycloalkyl group, an alkoxy group, an alkenyl group, an aryloxy group, an arylthio group, an alkylthio group, an aryl group, or a heteroaryl group; or a substituted or unsubstituted heteroaryl group,

r1 and r2 are each an integer from 1 to 4, and when r1 is 2 or higher, two or more R1's are the same as or different from each other, and when r2 is 2 or higher, two or more R2's are the same as or different from each other,

L1 and L2 are the same as or different from each other, and are each independently a substituted or unsubstituted arylene group,

X1 to X4 are the same as or different from each other, and are each independently O; or S,

Z1 and Z2 are the same as or different from each other, and are each independently a substituted or unsubstituted alkylene group; or a substituted or unsubstituted cycloalkylene group, and

a and b are the same as or different from each other, and are each independently an integer from 1 to 10, and when a and b are each 2 or higher, structures in each parenthesis are the same as or different from each other.

According to an exemplary embodiment of the present specification, the composition for preparing the polycarbonate resin further includes a compound of the following Chemical Formula 2a, and the compounds of Chemical Formula 1a and Chemical Formula 2a are included in amounts of 0.01 mole% to 100 mole% : 99.99 mole% to 0 mole%. Specifically, the compounds are included in amounts of 0.01 mole% to 99.99 mole% : 99.99 mole% to 0.01mole%. The compounds are included in amounts of more specifically 0.1 mole% to 99.9 mole%: 99.9 mole% to 0.1 mole%, 1 mole% to 99 mole%: 99 mole% to 1 mole%, 5 mole% to 90 mole%: 5 mole% to 90 mole%.

[Chemical Formula 2a]

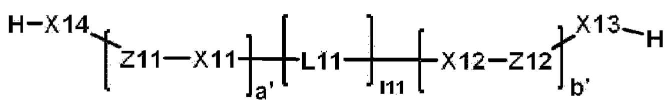

In Chemical Formula 2a,

L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11's are the same as or different from each other,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group,
a' and b' are the same as or different from each other, and are each independently an integer from 0 to 10, and when a' and b' are each 2 or higher, structures in each parenthesis are the same as or different from each other.

An exemplary embodiment of the present invention provides a method for preparing a polycarbonate resin, the method including: polymerizing a composition for preparing the polycarbonate resin, which includes the compound of Chemical Formula 1a; and a polycarbonate precursor. When the compound of Chemical Formula 1a is included, the compounds are easily polymerized, have a wide range of refractive indices or a high refractive index depending on the substituent, and have a wide range of glass transition temperatures.

An exemplary embodiment of the present invention provides a method for preparing a polycarbonate resin, the method including: polymerizing a composition for preparing the polycarbonate resin, which includes the compound of Chemical Formula 1a; the compound of Chemical Formula 2a; and a polycarbonate precursor. The compounds of Chemical Formula 1a and Chemical Formula 2a are included in amounts of 0.01 mole% to 100 mole% : 99.99 mole% to 0 mole%. Specifically, the compounds are included in amounts of 0.01 mole% to 99.99 mole% : 99.99 mole% to 0.01 mole%. The compounds are included in amounts of more specifically 0.1 mole% to 99.9 mole%: 99.9 mole% to 0.1 mole%, 1 mole% to 99 mole%: 99 mole% to 1 mole%, 5 mole% to 90 mole%: 5 mole% to 90 mole%.

When Chemical Formulae 1a and 2a are included in the above contents, the compounds are easily polymerized, have a wide range of refractive indices or a high refractive index depending on the substituent, and have a wide range of glass transition temperatures. Furthermore, the glass transition temperature (Tg) and refractive index can be adjusted, and the chain behavior of the polycarbonate resin can be made flexible, so that there is a technical effect advantageous for the injection processing of a molded article. The composition for preparing a polycarbonate resin may further include a solvent.

The solvent may be, for example, diphenyl ether, dimethylacetamide or methanol, but is not limited thereto, and any solvent applied in the art may be appropriately adopted.

The solvent may be included in an amount of 5 parts by weight to 60 parts by weight with respect to 100 parts by weight of the composition for preparing a resin.

The solvent may be included in an amount of preferably 5 parts by weight to 50 parts by weight, 7 parts by weight to 45 parts by weight or 8 parts by weight to 40 parts by weight with respect to 100 parts by weight of the composition for preparing a resin.

In an exemplary embodiment of the present specification, the compound may be the compound of Chemical Formula 1a, but is not limited thereto.

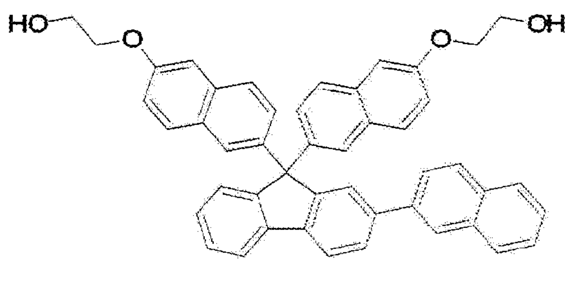

In an exemplary embodiment of the present specification, the compound of Chemical Formula 2a may be any one of the following compounds, but is not limited thereto.

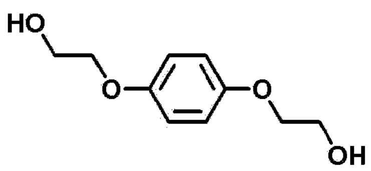
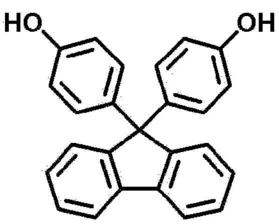
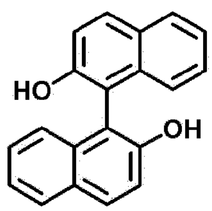

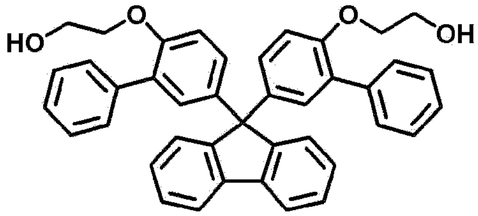

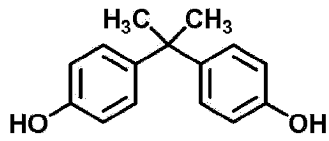

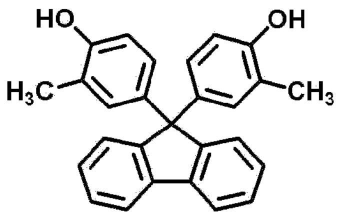

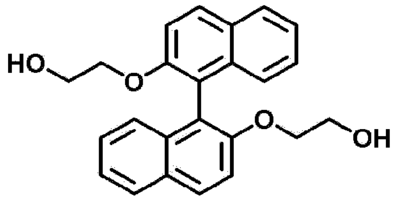

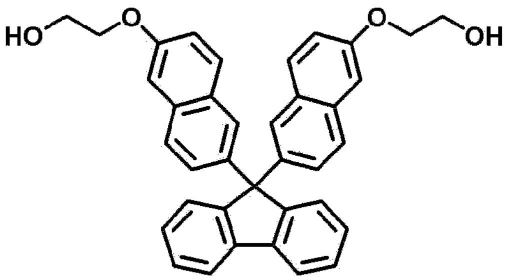

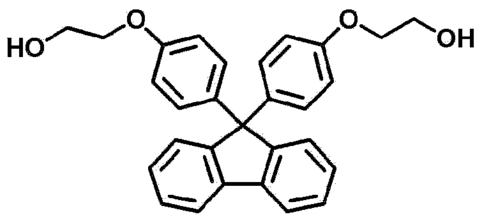

In an exemplary embodiment of the present specification, the compound of Chemical Formula 1a may be included in an amount of 1 part by weight to 100 parts by weight or 1 part by weight to 99 parts by weight with respect to 100 parts by weight of the composition for preparing a polycarbonate resin.

The compound of Chemical Formula 1a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the compound of Chemical Formula 2a may be included in an amount of 0 part by weight to 99 parts by weight, or 1 part by weight to 99 parts by weight with respect to 100 parts by weight of the composition for preparing a polycarbonate resin.

The compound of Chemical Formula 2a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the polycarbonate precursor may be included in an amount of 1 part by weight to 60 parts by weight with respect to 100 parts by weight of the composition for preparing a polycarbonate resin.

The polycarbonate precursor may be included in an amount of preferably 1 to 60 parts by weight, 1 to 55 parts by weight, 1 to 50 parts by weight, 1 to 45 parts by weight or 1 to 40 parts by weight with respect to 100 parts by weight of the composition for preparing a polycarbonate resin.

According to an exemplary embodiment of the present specification, the polycarbonate precursor is the following Chemical Formula A.

[Chemical Formula A]

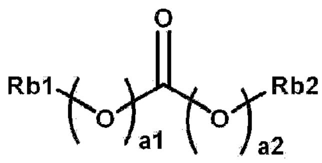

In Chemical Formula A,

Rb1 and Rb2 are the same as or different from each other, and are each independently a halogen group; a substituted or unsubstituted alkyl group; or a substituted or unsubstituted aryl group, and
a1 and a2 are each independently 0 or 1.

According to an exemplary embodiment of the present specification, Rb1 and Rb2 are the same as or different from each other, and are each independently a halogen group; a substituted or unsubstituted straight-chained or branched alkyl group having 1 to 30 carbon atoms; or a substituted or unsubstituted monocyclic or polycyclic aryl group having 6 to 30 carbon atoms.

According to an exemplary embodiment of the present specification, Rb1 and Rb2 are the same as or different from each other, and are each independently a halogen group; a substituted or unsubstituted straight-chained or branched alkyl group having 1 to 20 carbon atoms; or a substituted or unsubstituted monocyclic or polycyclic aryl group having 6 to 20 carbon atoms.

According to an exemplary embodiment of the present specification, Rb1 and Rb2 are the same as or different from each other, and are each independently a halogen group; a straight-chained or branched alkyl group having 1 to 30 carbon atoms; or a monocyclic or polycyclic aryl group having 6 to 30 carbon atoms.

According to an exemplary embodiment of the present specification, Rb1 and Rb2 are the same as or different from each other, and are each independently a halogen group; a straight-chained or branched alkyl group having 1 to 20 carbon atoms; or a monocyclic or polycyclic aryl group having 6 to 20 carbon atoms.

According to an exemplary embodiment of the present specification, Rb1 and Rb2 are the same as or different from each other, and are each independently -Cl; a methyl group; an ethyl group; an n-propyl group; an isopropyl group; an n-butyl group; or a phenyl group.

According to an exemplary embodiment of the present specification, a compound of Chemical Formula A is any one selected from the following compounds.

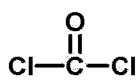

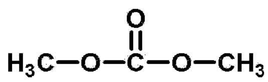

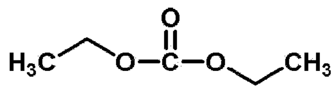

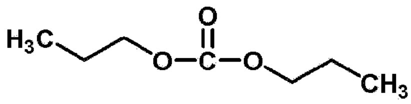

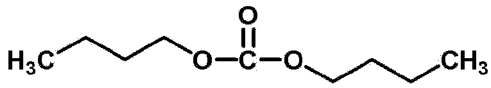

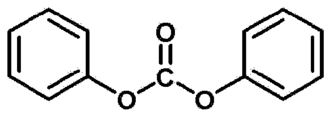

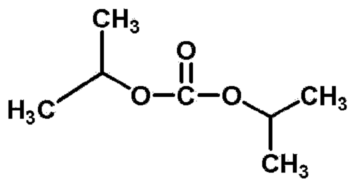

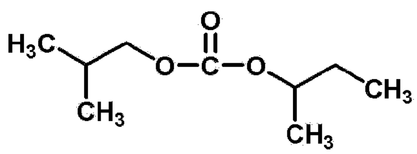

In the case of the polyester resin, the precursor (terephthalate

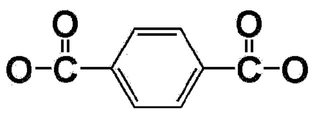

,

and the like) has a higher molecular weight than the precursor (carbonate

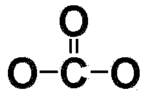

) of the polycarbonate resin, and accounts for a large proportion of the weight of the resin.

Since the precursor lowers the concentration of a diol monomer which implements a high refractive index, the refractive index of the polycarbonate resin is relatively higher than that of the polyester resin. In addition, the polyester resin has a large length of the conjugated bond due to the structural feature compared to polycarbonate resin, and has a disadvantage in that the yellow index is generally high due to intramolecular hydrogen bonding.

The polycarbonate precursor serves to link an additional comonomer, if necessary, and other specific examples thereof which may be applied in addition to the compound represented by Chemical Formula A include phosgene, triphosgene, diphosgene, bromophosgene, dimethyl carbonate, diethyl carbonate, dibutyl carbonate, dicyclohexyl carbonate, ditolyl carbonate, bis(chlorophenyl) carbonate, m-cresyl carbonate, dinaphthyl carbonate, bis(diphenyl) carbonate, bishaloformate, or the like, and any one of them or a mixture of two or more thereof may be used.

In an exemplary embodiment of the present specification, it is preferred that the polycarbonate resin is polymerized from the compound of Chemical Formula 1a and the polycarbonate precursor of Chemical Formula A.

By polymerizing the compound of Chemical Formula 1a and the polycarbonate precursor of Chemical Formula A, the unit of the above-described Chemical Formula 1 may be formed.

The compound of Chemical Formula 1a may be used in an amount of 1 part by mol to 100 parts by mol, and 1 part by mol to 99 parts by mol with respect to 100 parts by mol of the entire monomer constituting the polycarbonate resin including the unit of Chemical Formula 1.

The polycarbonate precursor of Chemical Formula A may be used in an amount of 50 parts by mol to 150 parts by mol with respect to 100 parts by mol of the entire monomer of the compound of Chemical Formula 1a constituting the resin.

In an exemplary embodiment of the present specification, the polycarbonate resin may further include the unit of Chemical Formula 2.

By polymerizing the compound of Chemical Formula 2a and the polycarbonate precursor of Chemical Formula A, the unit of the above-described Chemical Formula 2 may be formed.

The compound of Chemical Formula 2a may be used in an amount of 0 part by mol to 99 parts by mol, and 1 part by mol to 99 parts by mol with respect to 100 parts by mol of the entire monomer constituting the polycarbonate resin including the unit of Chemical Formula 2.

The polycarbonate precursor of Chemical Formula A may be used in an amount of 50 parts by mol to 150 parts by mol with respect to 100 parts by mol of the entire monomer of the compound of Chemical Formula 2a constituting the resin.

For the polymerization of the resin according to the present specification, methods known in the art may be used. It is preferred that the polymerization is performed by a melt polycondensation method.

In the melt polycondensation method, a catalyst may be further applied as needed using the composition for preparing a polycarbonate resin, and melt polycondensation may be performed under heating and further under normal pressure or reduced pressure while removing by-products by an ester exchange reaction. As the catalyst, a material generally applied in the art may be adopted.

Specifically, in the melt polycondensation method, it is preferred that the compound of Chemical Formula 1a; and the polycarbonate precursor are melted in a reaction vessel, and then a reaction is performed in a state where a by-product compound is allowed to stay. The composition for preparing a polycarbonate resin may further include the compound of Chemical Formula 2a.

In order to allow the by-product compound to stay, pressure may be controlled by closing the reaction device, or reducing pressure or increasing pressure.

The reaction time of this process is 20 minutes or more and 600 minutes or less, preferably 40 minutes or more and 450 minutes or less, and more preferably 60 minutes or more and 300 minutes or less.

In this case, when the by-product compound is distilled off immediately after being produced, a resin to be finally obtained has a small content of high molecular weight materials. However, when the by-product compound is allowed to stay in the reaction vessel for a certain period of time, the finally obtained resin is obtained to have a large content of high molecular weight materials.

The melt polycondensation method may be performed continuously or in a batch manner. The reaction device used for performing the reaction may be a vertical type equipped with an anchor type impeller, a Maxblend impeller, a helical ribbon type impeller or the like, may be a horizontal type equipped with a paddle blade, a lattice blade, a spectacle-shaped blade or the like, and may be an extruder type equipped with a screw. In addition, it is desirably performed to use a reaction device in which these reaction devices are appropriately combined in consideration of the viscosity of the polymer.

In the method for preparing a polycarbonate resin used in the present specification, the catalyst may be removed or deactivated in order to maintain heat stability and hydrolysis stability after the completion of the polymerization reaction. A method of deactivating the catalyst by adding a known acidic material in the art may be preferably performed.

As the acidic material, for example, esters such as butyl benzoate, aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenylphosphine and bis(diphenylphosphino)ethane; boric acids such as boric acid and phenylboric acid; aromatic sulfonic acid salts such as dodecylbenzenesulfonic acid tetrabutylphosphonium salts; organic halides such as stearic acid chloride, benzoyl chloride and p-toluenesulfonic acid chloride; alkylsulfuric acids such as dimethylsulfuric acid; organic halides such as benzyl chloride, and the like are preferably used.
The acidic material may be used in an amount of 0.1 parts by mol to 5 parts by mol, preferably 0.1 parts by mol to 1 part by mol with respect to 100 parts by mol of the catalyst.
When the amount of the acidic material is smaller than 0.1 parts by mol, the deactivation effect becomes insufficient, which is not preferred. Further, when the amount exceeds 5 parts by mol, the heat resistance of the resin deteriorates and the molded article is easily colored, which is not preferred.
After the catalyst is deactivated, a process of devolatilizing and removing a low boiling point compound in the resin may be further performed under a pressure of 0.1 mmHg to 1 mmHg and at a temperature of 200°C to 350°C. In this process, a horizontal-type apparatus equipped with a stirring blade having excellent surface renewal ability such as a paddle blade, a lattice blade, and a spectacle-shaped blade, or a thin film evaporator is preferably used.
It is preferred that the content of foreign materials in the resin of the present specification is as small as possible, and filtration of a melting raw material, filtration of a catalyst solution, and the like are preferably performed.
The mesh of the filter used in the filtration is preferably 5 μm or less, and more preferably 1 μm or less. In addition, filtration of the produced resin using a polymer filter is preferably performed. The mesh of the polymer filter is preferably 100 μm or less, and more preferably 30 μm or less. Furthermore, a process of obtaining a resin pellet needs to be performed in a low-dust environment, and the environment is preferably Class 6 or lower, and more preferably Class 5 or lower.
Further, examples of a method of molding a molded article including the polycarbonate resin include compression molding, molds, roll processing, extrusion molding, stretching, and the like in addition to injection molding, but are not limited thereto.
Another exemplary embodiment of the present specification provides a polycarbonate resin composition including the resin according to the above-described exemplary embodiments.
In an exemplary embodiment of the present specification, the polycarbonate resin may be included in an amount of 1 part by weight to 80 parts by weight based on 100 parts by weight of the polycarbonate resin composition.
In an exemplary embodiment of the present specification, the polycarbonate resin composition may further include a solvent. The solvent may be, for example, dimethylacetamide or 1,2-dichlorobenzene.
The solvent may be included in an amount of 20 parts by weight to 99 parts by weight based on 100 parts by weight of the polycarbonate resin composition.
The polycarbonate resin composition may further include an additional monomer in addition to the compound of Chemical Formula 1a. The additional monomer is not particularly limited, and a monomer generally applied in the art related to polycarbonate may be appropriately adopted as long as the main physical properties of the polycarbonate resin composition are not changed. The additional monomer may be used in an amount of 1 part by mol to 50 parts by mol with respect to 100 parts by mol of the entire monomer constituting the resin including the unit of Chemical Formula 1.
The polycarbonate resin composition may further include one or more selected from the group consisting of an additive, for example, an antioxidant, a plasticizer, an anti-static agent, a nucleating agent, a flame retardant, a lubricant, an impact modifier, a fluorescent brightener, a UV absorber, a pigment and a dye, if necessary, in addition to a resin including the unit of Chemical Formula 1.
The additive may be included in an amount of 1 part by weight to 99 parts by weight based on 100 parts by weight of the polycarbonate resin composition.
The type of antioxidant, plasticizer, anti-static agent, nucleating agent, flame retardant, lubricant, impact modifier, fluorescent brightener, UV absorber, pigment or dye is not particularly limited, and those applied in the art may be appropriately adopted.
Still another exemplary embodiment of the present specification provides a molded article including the resin composition according to the above-described exemplary embodiments.
In an exemplary embodiment of the present specification, the molded article may be prepared from the polycarbonate resin composition or a cured product thereof.
As an example of a method of preparing the molded article, it is possible to include mixing a resin including the unit of Chemical Formula 1 and the additive well using a mixer, preparing the resulting mixture as a pellet by extrusion molding

the mixture using an extruder, drying the pellet, and then injecting the pellet using an injection molding machine.

In an exemplary embodiment of the present specification, the molded article is an optical lens.

In an exemplary embodiment of the present specification, the optical lens has a thickness of 0.1 μm to 30 mm.

According to the difference in the refractive index of the optical lens, the position of the focal point where the light is focused varies in the lenses having the same thickness. This is illustrated in FIG. 1. This changes the position of the focal point focused between a camera lens and an image sensor and between the spectacle lens and the human pupil, and the thickness of the lens and film is reduced as the refractive index is increased to adjust the focal point at the same position. An optical lens according to an exemplary embodiment of the present specification has a high refractive index, and thus may implement an optical lens with a small thickness.

The optical lens is manufactured using the polycarbonate resin, has a small thickness, a high refractive index and high transparency, and may be preferably applied to a camera.

In an exemplary embodiment of the present specification, the molded article is an optical film or optical thin film. The optical film or optical thin film is manufactured using the polycarbonate resin, has a small thickness and excellent light harvesting effect and light diffusion effect, and may be preferably applied to backlight modules, flat lenses, and meta lenses of liquid crystal displays, and the like.

In an exemplary embodiment of the present specification, the optical film or optical thin film has a thickness of 0.1 nm to 10 mm.

In an exemplary embodiment of the present specification, the molded article is an optical resin. The optical resin is manufactured using the polycarbonate resin, and has a low optical loss due to its small thickness, high refractive index and low birefringence.

The optical resin according to an exemplary embodiment of the present specification has a low optical loss due to its high refractive index and low birefringence. The optical resin according to an exemplary embodiment of the present specification has a glass transition temperature of 90°C to 200°C, which is not very high or low in heat resistance characteristics compared to general optical materials in the related art, and thus is easily processed and shows excellent heat resistance characteristics. When the glass transition temperature exceeds 200°C, it is difficult to process the optical resin because the melt flow index increases, and when the glass transition temperature is less than 90°C, the low heat resistance characteristics result in poor weatherability due to the external environment. Accordingly, there are few optical resins according to an exemplary embodiment of the present specification, which have suitable thermal properties and implement a high refractive index.

[Best Mode]

Hereinafter, the present specification will be exemplified in more detail through Examples.

Preparation Example 1: Preparation of Resin 1

66.48 g (0.1009 mol) of Monomer 1-1 and 21.422 g (0.100 mmol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 1, which is a polymerized polymer molten resin, was obtained by blowing nitrogen into the reactor to create a normal pressure atmosphere.

Monomer 1-1:

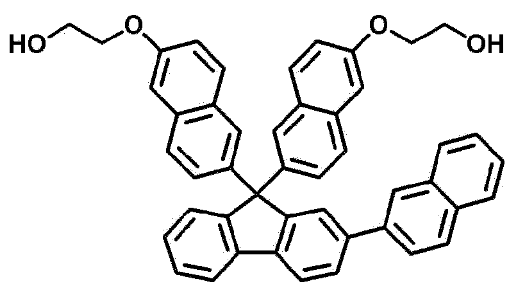

Preparation Examples 2 to 17 Preparation of Resins 2 to 17

Resins 2 to 17 were obtained by preparation in the same manner as in Preparation Example 1, except that the

monomers in the following Table 1 were used in amounts of the following parts by mol instead of Monomer 1-1 in Preparation Example 1.

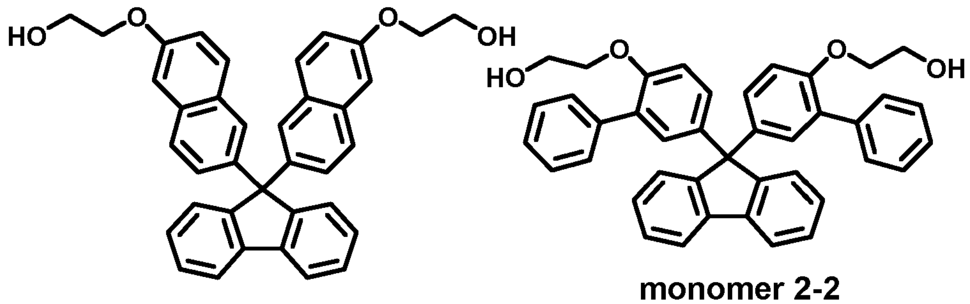

monomer 2-1

monomer 2-2

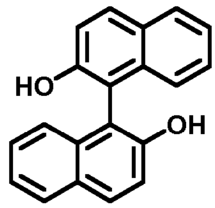

monomer 2-3

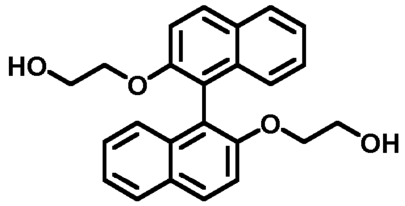

monomer 2-4

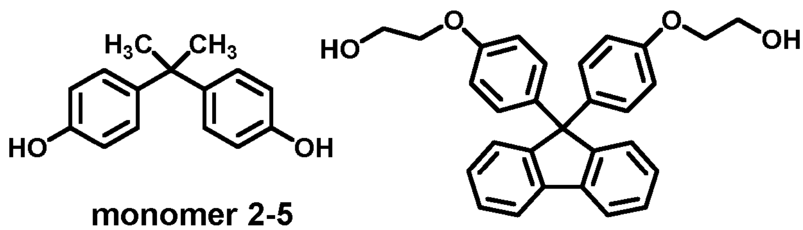

monomer 2-5

monomer 2-6

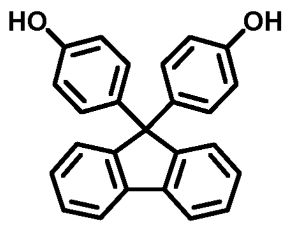

monomer 2-7

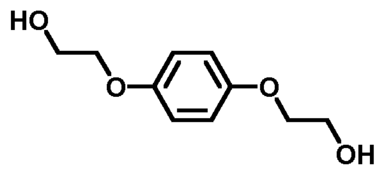

monomer 2-8

[Table 1]

| No. | Composition (part by mol) of resin | | | | | | | | |
|---|---|---|---|---|---|---|---|---|---|
| | Monomer 1-1 | Monomer 2-1 | Monomer 2-2 | Monomer 2-3 | Monomer 2-4 | Monomer 2-5 | Monomer 2-6 | Monomer 2-7 | Monomer 2-8 |
| Resin 1 | 100 | | | | | | | | |
| Resin 2 | 20 | 80 | | | | | | | |
| Resin 3 | 20 | | 80 | | | | | | |
| Resin 4 | 20 | | | | 80 | | | | |
| Resin 5 | 20 | | | | | | 80 | | |
| Resin 6 | 5 | 62 | 8 | | 25 | | | | |

(continued)

| No. | Composition (part by mol) of resin | | | | | | | | |
|---|---|---|---|---|---|---|---|---|---|
| | Monomer 1-1 | Monomer 2-1 | Monomer 2-2 | Monomer 2-3 | Monomer 2-4 | Monomer 2-5 | Monomer 2-6 | Monomer 2-7 | Monomer 2-8 |
| Resin 7 | 5 | 22 | 37 | | 36 | | | | |
| Resin 8 | 5 | 45 | | | 39 | 11 | | | |
| Resin 9 | 5 | 28 | | | 38 | 29 | | | |
| Resin 10 | 5 | 35 | | | 40 | | 20 | | |
| Resin 11 | 5 | 68 | | | 21 | | 6 | | |
| Resin 12 | 5 | 10 | 65 | | | | | | 20 |
| Resin 13 | 5 | 50 | 40 | | | | | | 5 |
| Resin 14 | 5 | 45 | 40 | | | | | 10 | |
| Resin 15 | 5 | 5 | 10 | | | | | 80 | |
| Resin 16 | 5 | 5 | 40 | 50 | | | | | |
| Resin 17 | 5 | 15 | 10 | 70 | | | | | |

Experimental Example.

The molecular weight and molecular weight distribution of the polymerized resin sample were confirmed through gel permeation chromatography (GPC), and a thermogram was obtained using a differential scanning calorimeter (DSC) to investigate the thermal characteristics. After a film was formed to measure the refractive index and the Abbe's Number, a result value according to the wavelength of light was obtained using an ellipsometer.

For the molecular weight through gel permeation chromatography (GPC), results were obtained by injecting a solution produced using tetrahydrofuran (THF, stabilized with butylated hydroxytoluene (BHT)) as a solvent, dissolving the resin sample in tetrahydrofuran at a concentration of 1.0 mg/1 ml, filtering the dissolved resin sample with a syringe filter, and measuring the molecular weight at 40°C, and the results are shown in the following Table 2. A Waters RI detector was used, and two Agilent PLgel MIXED-B columns were used.

A differential scanning calorimeter (DSC) was measured to determine the glass transition temperature (Tg) of the resin. A glass transition temperature (Tg) was obtained on a graph obtained by heating 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 2.

The refractive index can be measured by the prism coupler method, and for example SPA-3DR manufactured by SAIRON Technology Inc. may be used, but is not limited thereto.

The refractive index of the resin may be calculated by measuring the change in the amount of light reflected from a prepared sample in which the resin is made to be flat by placing a slide glass on a heating plate at 200°C, using a prism coupler. When the prepared sample is brought into contact with the prism, and then the laser is incident on the prism, most of the incident laser is totally reflected, but when specific incident angle and conditions are satisfied, light is coupled because an evanescent field is generated at the boundary surface. By measuring an angle at which coupling occurs, and as a result, the intensity of the light detected by a detector sharply decreases, the refractive index of the film can be automatically calculated by the prism coupler from the parameters related to the polarization mode of light and the

refractive indices of the prism and the substrate. The refractive index and Abbe's Number are shown in the following Tables 2. Specifically, the refractive index was measured at a wavelength of 587 nm, and for an Abbe's Number, the Abbe's Number was obtained by the following Equation by measuring the refractive index ($n_D$, $n_F$, and $n_C$) at a wavelength of D (587 nm), F (486 nm), and C (656 nm), respectively.

$$\text{Abbe's Number} = (n_D-1)/(n_F - n_C)$$

[Table 2]

| No. | Mn (g/mol) | Mw (g/mol) | PDI | RI (587nm) | Tg (°C) | Abbe's Number |
|---|---|---|---|---|---|---|
| Resin 1 | 23000 | 43000 | 1. 87 | 1.7015 | 178.4 | 15.0 |
| Resin 2 | 18000 | 32000 | 1. 78 | 1.6894 | 170.4 | 16.2 |
| Resin 3 | 12000 | 22000 | 1. 83 | 1.6633 | 154.2 | 20.1 |
| Resin 4 | 13000 | 24000 | 1. 85 | 1.6749 | 126.3 | 18.7 |
| Resin 5 | 11000 | 18000 | 1. 64 | 1.6456 | 151.0 | 21.1 |
| Resin 6 | 17000 | 30000 | 1.76 | 1.6800 | 153.5 | 18.6 |
| Resin 7 | 15000 | 26000 | 1.73 | 1.6685 | 141.6 | 19.8 |
| Resin 8 | 18000 | 32000 | 1. 78 | 1.6687 | 144.3 | 18.7 |
| Resin 9 | 20000 | 38000 | 1. 90 | 1.6503 | 139.7 | 21.3 |
| Resin 10 | 16000 | 28000 | 1.75 | 1.6690 | 142.0 | 19.1 |
| Resin 11 | 15000 | 26000 | 1.73 | 1.6801 | 155.9 | 18.2 |
| Resin 12 | 17000 | 31000 | 1. 82 | 1.6600 | 136.2 | 20.4 |
| Resin 13 | 18000 | 34000 | 1. 89 | 1.6700 | 150.9 | 19.5 |
| Resin 14 | 14000 | 23000 | 1. 64 | 1.6690 | 158.7 | 19.7 |
| Resin 15 | 13000 | 24000 | 1. 85 | 1.6600 | 174.4 | 20.4 |
| Resin 16 | 14000 | 22000 | 1.57 | 1.6820 | 166.4 | 17.2 |
| Resin 17 | 12000 | 20000 | 1. 67 | 1.6920 | 170.5 | 16.1 |

In Table 2, Mn means the number average molecular weight, Mw means the weight average molecular weight, PDI means the polydispersity index, RI means the refractive index, Tg means the glass transition temperature, and the refractive index is a value measured at a wavelength of 587 nm.

According to Table 2, the resin according to exemplary embodiments of the present invention includes the unit of Chemical Formula 1, and particularly, the benzene ring of the fluorene core structure of Chemical Formula 1 is also substituted with an electron-rich R1 substituent, so that due to the high electron density of the fluorene core structure, the refractive index of the polycarbonate resin including the same is improved.

Furthermore, since the unit of Chemical Formula 2 is further included in polycarbonate resin, the glass transition temperature (Tg) and refractive index can be adjusted, and the chain behavior of the polycarbonate resin can be made flexible, so that there is a technical effect advantageous for the injection processing of a molded article.

## Claims

**1.** A polycarbonate resin comprising a unit of the following Chemical Formula 1:

[Chemical Formula 1]

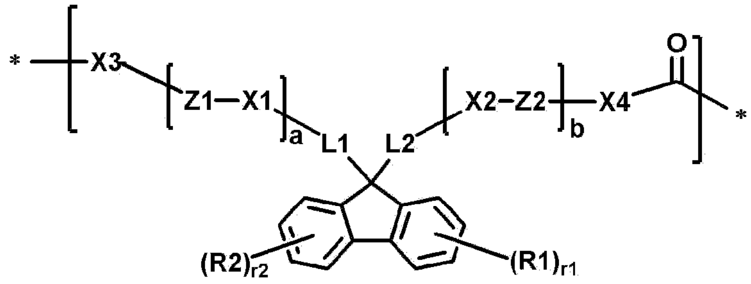

wherein, in Chemical Formula 1,

R1 and R2 are different from each other, and are each independently hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; an aryl group which is unsubstituted or substituted with deuterium, a halogen group, a hydroxyl group, a cyano group, an alkyl group, a cycloalkyl group, an alkoxy group, an alkenyl group, an aryloxy group, an arylthio group, an alkylthio group, an aryl group, or a heteroaryl group; or a substituted or unsubstituted heteroaryl group,
r1 and r2 are each an integer from 1 to 4, and when r1 is 2 or higher, two or more R1's are the same as or different from each other, and when r2 is 2 or higher, two or more R2's are the same as or different from each other,
L1 and L2 are the same as or different from each other, and are each independently a substituted or unsubstituted arylene group,
X1 and X2 are the same as or different from each other, and are each independently O; or S,
X3 is O,
X4 is O,
Z1 and Z2 are the same as or different from each other, and are each independently a substituted or unsubstituted alkylene group; or a substituted or unsubstituted cycloalkylene group,
a and b are the same as or different from each other, and are each independently an integer from 1 to 10, and when a and b are each 2 or higher, structures in each parenthesis are the same as or different from each other, and
* means a moiety linked to the main chain of the resin.

**2.** The polycarbonate resin of claim 1, further comprising a unit of the following Chemical Formula 2:

[Chemical Formula 2]

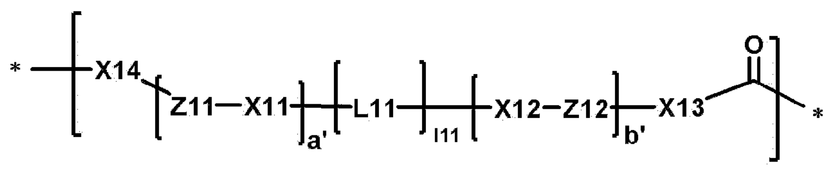

in Chemical Formula 2,

L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11's are the same as or different from each other,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group,
a' and b' are the same as or different from each other, and are each independently an integer from 0 to 10, and when a' and b' are each 2 or higher, structures in each parenthesis are the same as or different from each other, and

* means a moiety linked to the main chain of the resin.

3. The polycarbonate resin of claim 1, wherein R1 and R2 are different from each other, and are each independently hydrogen; or an unsubstituted monocyclic or polycyclic aryl group having 6 to 30 carbon atoms,

L1 and L2 are the same as or different from each other, and are each independently a monocyclic or polycyclic arylene group having 6 to 30 carbon atoms,
X1 to X4 are O, and
Z1 and Z2 are the same as or different from each other, and are each independently a straight-chained or branched alkylene group having 1 to 30 carbon atoms.

4. The polycarbonate resin of claim 1, wherein the polycarbonate resin has a weight average molecular weight (Mw) of 5,000 g/mol to 500,000 g/mol, determined by gel permeation chromatography as set out in the specification.

5. The polycarbonate resin of claim 1, wherein a refractive index of the polycarbonate resin, which is measured at a wavelength of 587 nm, is 1.50 to 1.75, determined using a prism coupler as set out in the specification.

6. The polycarbonate resin of claim 1, wherein the polycarbonate resin has a glass transition temperature (Tg) of 90°C to 200°C, determined using a differential scanning calorimeter as set out in the specification.

7. The polycarbonate resin of claim 1, wherein the Abbe's Number of the polycarbonate resin, which is measured at a wavelength of 486, 587, and 656 nm, is 5 to 45; wherein the Abbe's number is obtained by the following formula:

$$\text{Abbe's Number} = (n_D - 1)/(n_F - n_C)$$

wherein $n_D$, $n_F$, and $n_C$ are the refractive indices at the wavelength of D: 587 nm, F: 486 nm, and C: 656 nm, respectively, each determined using a prism coupler as set out in the specification.

8. A method for preparing the polycarbonate resin according to any one of claims 1 to 7, the method comprising: polymerizing a composition for preparing a polycarbonate resin comprising a compound of the following Chemical Formula 1a; and
a polycarbonate precursor:

[Chemical Formula 1a]

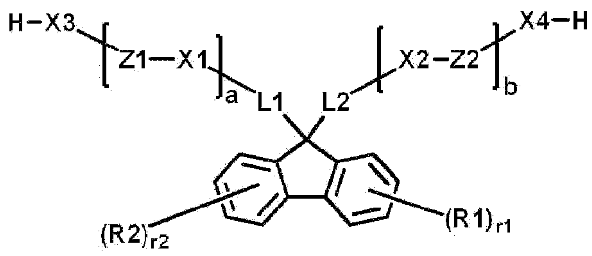

wherein, in Chemical Formula 1a,

R1 and R2 are different from each other, and are each independently hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; an aryl group which is unsubstituted or substituted with deuterium, a halogen group, a hydroxyl group, a cyano group, an alkyl group, a cycloalkyl group, an alkoxy group, an alkenyl group, an aryloxy group, an arylthio group, an alkylthio group, an aryl group, or a heteroaryl group; or a substituted or unsubstituted heteroaryl group,
r1 and r2 are each an integer from 1 to 4, and when r1 is 2 or higher, two or more R1's are the same as or different from each other, and when r2 is 2 or higher, two or more R2's are the same as or different from each other,
L1 and L2 are the same as or different from each other, and are each independently a substituted or unsubstituted

arylene group,
X1 and X2 are the same as or different from each other, and are each independently O; or S,
X3 is O,
X4 is O, and
Z1 and Z2 are the same as or different from each other, and are each independently a substituted or unsubstituted alkylene group; or a substituted or unsubstituted cycloalkylene group,
a and b are the same as or different from each other, and are each independently an integer from 1 to 10, and when a and b are each 2 or higher, structures in each parenthesis are the same as or different from each other.

**9.** The method of claim 8, wherein the composition for preparing the polycarbonate resin further comprises a compound of the following Chemical Formula 2a, and the compound of Chemical Formula 1a and Chemical Formula 2a are comprised in amounts of 0.01 mole% to 100 mole% : 99.99 mole% to 0 mole%:

[Chemical Formula 2a]

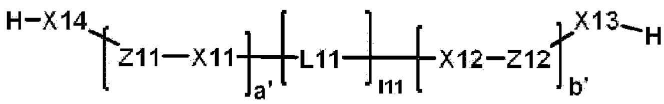

in Chemical Formula 2a,

L11 is a substituted or unsubstituted alkylene group; a substituted or unsubstituted cycloalkylene group; a divalent condensed ring group of an aromatic hydrocarbon ring and an aliphatic hydrocarbon ring, which is substituted or unsubstituted; or a substituted or unsubstituted arylene group,
l11 is an integer from 1 to 5, and when l11 is 2 or higher, two or more L11's are the same as or different from each other,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group,
a' and b' are the same as or different from each other, and are each independently an integer from 0 to 10, and when a' and b' are each 2 or higher, structures in each parenthesis are the same as or different from each other.

**10.** The method of claim 8, wherein the polycarbonate precursor is a compound of the following Chemical Formula A:

[Chemical Formula A]

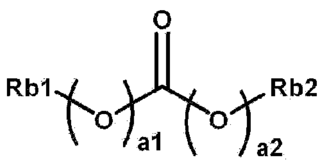

in Chemical Formula A,

Rb1 and Rb2 are the same as or different from each other, and are each independently a halogen group; a substituted or unsubstituted alkyl group; or a substituted or unsubstituted aryl group, and
a1 and a2 are each 0 or 1.

**11.** A polycarbonate resin composition comprising the polycarbonate resin according to any one of claims 1 to 7.

**12.** A molded article comprising the polycarbonate resin composition according to claim 11.

## Patentansprüche

1. Polycarbonatharz, umfassend eine Einheit der folgenden chemischen Formel 1:

[chemische Formel 1]

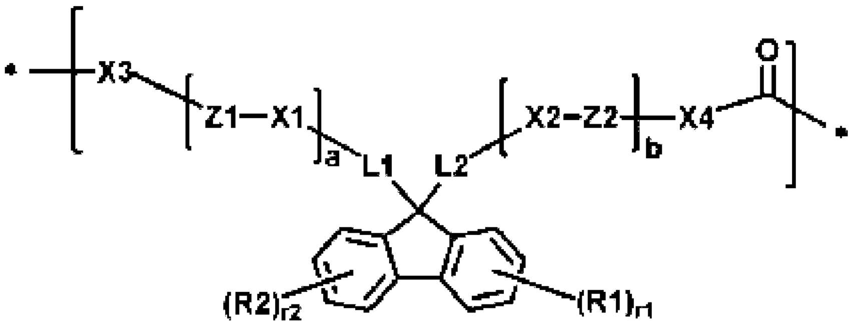

worin in der chemischen Formel 1

R1 und R2 sich voneinander unterscheiden und jeweils unabhängig Wasserstoff; Deuterium; eine Halogengruppe; eine Cyanogruppe; eine substituierte oder unsubstituierte Alkylgruppe; eine substituierte oder unsubstituierte Cycloalkylgruppe; eine substituierte oder unsubstituierte Alkoxygruppe; eine substituierte oder unsubstituierte Silylgruppe; eine Arylgruppe, die unsubstituiert ist oder substituiert ist mit Deuterium, einer Halogengruppe, einer Hydroxylgruppe, einer Cyanogruppe, einer Alkylgruppe, einer Cycloalkylgruppe, einer Alkoxygruppe, einer Alkenylgruppe, einer Aryloxygruppe, einer Arylthiogruppe, einer Alkylthiogruppe, einer Arylgruppe oder einer Heteroarylgruppe; oder eine substituierte oder unsubstituierte Heteroarylgruppe sind,
r1 und r2 jeweils eine ganze Zahl von 1 bis 4 sind, und wenn r1 2 oder größer ist, zwei oder mehr R1 gleich oder voneinander verschieden sind, und wenn r2 2 oder größer ist, zwei oder mehr R2 gleich oder voneinander verschieden sind,
L1 und L2 gleich oder voneinander verschieden sind und jeweils unabhängig eine substituierte oder unsubstituierte Arylengruppe sind,
X1 und X2 gleich oder voneinander verschieden sind und jeweils unabhängig O; oder S sind,
X3 O ist,
X4 O ist,
Z1 und Z2 gleich oder voneinander verschieden sind und jeweils unabhängig eine substituierte oder unsubstituierte Alkylengruppe; oder eine substituierte oder unsubstituierte Cycloalkylengruppe sind,
a und b gleich oder voneinander verschieden sind und jeweils unabhängig eine ganze Zahl von 1 bis 10 sind, und wenn a und b jeweils 2 oder größer sind, die Strukturen in jeder Klammer gleich oder voneinander verschieden sind, und
* einen Rest bezeichnet, der mit der Hauptkette des Harzes verknüpft ist.

2. Polycarbonatharz gemäß Anspruch 1, ferner umfassend eine Einheit der folgenden chemischen Formel 2:

[Chemische Formel 2]

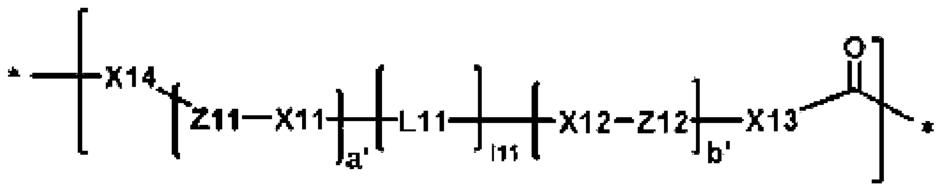

worin in der chemischen Formel 2

L11 eine substituierte oder unsubstituierte Alkylengruppe; eine substituierte oder unsubstituierte Cycloalkylengruppe; eine divalente kondensierte Ringgruppe aus einem aromatischen Kohlenwasserstoffring und einem aliphatischen Kohlenwasserstoffring, die substituiert oder unsubstituiert ist; oder eine substituierte oder unsubstituierte Arylengruppe ist,

l11 eine ganze Zahl von 1 bis 5 ist, und wenn l11 2 oder größer ist, zwei oder mehr L11 gleich oder voneinander verschieden sind,

X11 bis X14 gleich oder voneinander verschieden sind und jeweils unabhängig O; oder S sind,

Z11 und Z12 gleich oder voneinander verschieden sind und jeweils unabhängig eine substituierte oder unsubstituierte Alkylengruppe; oder eine substituierte oder unsubstituierte Cycloalkylengruppe sind,

a' und b' gleich oder voneinander verschieden sind und jeweils unabhängig eine ganze Zahl von 0 bis 10 sind, und wenn a' und b' jeweils 2 oder größer sind, die Strukturen in jeder Klammer gleich oder voneinander verschieden sind, und

* einen Rest bezeichnet, der mit einer Hauptkette des Harzes verknüpft ist.

**3.** Polycarbonatharz gemäß Anspruch 1, worin R1 und R2 sich voneinander unterscheiden und jeweils unabhängig Wasserstoff; oder eine unsubstituierte monocyclische oder polycyclische Arylgruppe mit 6 bis 30 Kohlenstoffatomen sind,

L1 und L2 gleich oder voneinander verschieden sind und jeweils unabhängig eine monocyclische oder polycyclische Arylengruppe mit 6 bis 30 Kohlenstoffatomen sind,

X1 bis X4 O sind und

Z1 und Z2 gleich oder voneinander verschieden sind und jeweils unabhängig eine geradkettige oder verzweigte Alkylengruppe mit 1 bis 30 Kohlenstoffatomen sind.

**4.** Polycarbonatharz gemäß Anspruch 1, worin das Polycarbonatharz ein gewichtsgemitteltes Molekulargewicht (Mw) von 5.000 g/mol bis 500.000 g/mol aufweist, bestimmt mittels Gelpermeationschromatographie wie in der Beschreibung ausgeführt.

**5.** Polycarbonatharz gemäß Anspruch 1, worin der Brechungsindex des Polycarbonatharzes, der bei einer Wellenlänge von 587 nm gemessen wird, 1,50 bis 1,75 beträgt, bestimmt unter Verwendung eines Prismenkopplers wie in der Beschreibung angegeben.

**6.** Polycarbonatharz gemäß Anspruch 1, worin das Polycarbonatharz eine Glasübergangstemperatur (Tg) von 90°C bis 200°C aufweist, bestimmt unter Verwendung eines dynamischen Differenzkalorimeters wie in der Beschreibung ausgeführt.

**7.** Polycarbonatharz gemäß Anspruch 1, worin die Abbe-Zahl des Polycarbonatharzes, die bei einer Wellenlänge von 486, 587 und 656 nm gemessen wird, 5 bis 45 beträgt;

worin die Abbe-Zahl erhalten wird durch die folgende Formel:

$$\text{Abbe-Zahl} = (n_D - 1)/(n_F - n_C)$$

worin $n_D$, $n_F$ und $n_C$ die Brechungsindizes bei der Wellenlänge von D: 587 nm, F: 486 nm und C: 656 nm sind, jeweils bestimmt unter Verwendung eines Prismenkopplers wie in der Beschreibung ausgeführt.

**8.** Verfahren zur Herstellung des Polycarbonatharzes gemäß irgendeinem der Ansprüche 1 bis 7, worin das Verfahren umfasst: Polymerisieren einer Zusammensetzung zur Herstellung eines Polycarbonatharzes, umfassend eine Verbindung der folgenden chemischen Formel 1a; und einen Polycarbonat-Vorläufer:

[Chemische Formel 1a]

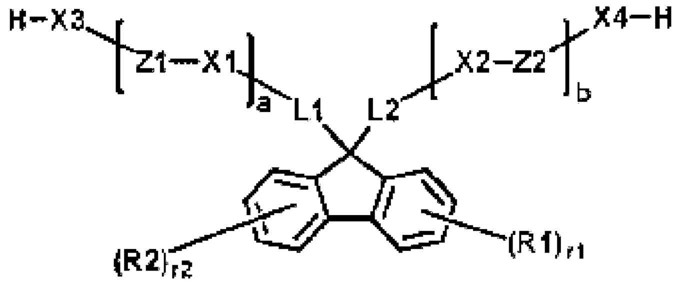

worin in der chemischen Formel 1a,

R1 und R2 voneinander verschieden sind und jeweils unabhängig Wasserstoff; Deuterium; eine Halogengruppe; eine Cyanogruppe; eine substituierte oder unsubstituierte Alkylgruppe; eine substituierte oder unsubstituierte Cycloalkylgruppe; eine substituierte oder unsubstituierte Alkoxygruppe; eine substituierte oder unsubstituierte Silylgruppe; eine Arylgruppe, die unsubstituiert ist oder substituiert ist mit Deuterium, einer Halogengruppe, einer Hydroxylgruppe, einer Cyanogruppe, einer Alkylgruppe, einer Cycloalkylgruppe, einer Alkoxygruppe, einer Alkenylgruppe, einer Aryloxygruppe, einer Arylthiogruppe, einer Alkylthiogruppe, einer Arylgruppe oder einer Heteroarylgruppe; oder eine substituierte oder unsubstituierte Heteroarylgruppe sind,
r1 und r2 jeweils eine ganze Zahl von 1 bis 4 sind, und wenn r1 2 oder größer ist, zwei oder mehr R1 gleich oder voneinander verschieden sind, und wenn r2 2 oder größer ist, zwei oder mehr R2 gleich oder voneinander verschieden sind,
L1 und L2 gleich oder voneinander verschieden sind und jeweils unabhängig eine substituierte oder unsubstituierte Arylengruppe sind,
X1 und X2 gleich oder voneinander verschieden sind und jeweils unabhängig O; oder S sind,
X3 O ist,
X4 O ist und
Z1 und Z2 gleich oder voneinander verschieden sind und jeweils unabhängig eine substituierte oder unsubstituierte Alkylengruppe; oder eine substituierte oder unsubstituierte Cycloalkylengruppe sind,
a und b gleich oder voneinander verschieden sind und jeweils unabhängig eine ganze Zahl von 1 bis 10 sind, und wenn a und b jeweils 2 oder größer sind, die Strukturen in jeder Klammer gleich oder voneinander verschieden sind.

**9.** Verfahren gemäß Anspruch 8, worin die Zusammensetzung zur Herstellung des Polycarbonatharzes ferner eine Verbindung der folgenden chemischen Formel 2a umfasst, und worin die Verbindung der chemischen Formel 1a und der chemischen Formel 2a in Mengen von 0,01 mol-% bis 100 mol-% : 99,99 mol-% bis 0 mol-% umfasst sind:

[Chemische Formel 2a]

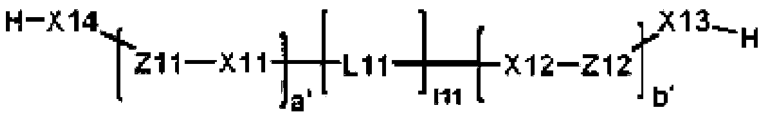

worin in der chemischen Formel 2a

L11 eine substituierte oder unsubstituierte Alkylengruppe; eine substituierte oder unsubstituierte Cycloalkylengruppe; eine divalente kondensierte Ringgruppe aus einem aromatischen Kohlenwasserstoffring und einem aliphatischen Kohlenwasserstoffring, die substituiert oder unsubstituiert ist; oder eine substituierte oder unsubstituierte Arylengruppe ist,
l11 eine ganze Zahl von 1 bis 5 ist, und wenn l11 2 oder größer ist, zwei oder mehr L11 gleich oder voneinander verschieden sind,
X11 bis X14 gleich oder voneinander verschieden sind und jeweils unabhängig O; oder S sind,
Z11 und Z12 gleich oder voneinander verschieden sind und jeweils unabhängig eine substituierte oder

unsubstituierte Alkylengruppe; oder eine substituierte oder unsubstituierte Cycloalkylengruppe sind, a' und b' gleich oder voneinander verschieden sind und jeweils unabhängig eine ganze Zahl von 0 bis 10 sind, und wenn a' und b' jeweils 2 oder größer sind, die Strukturen in jeder Klammer gleich oder voneinander verschieden sind.

**10.** Verfahren gemäß Anspruch 8, worin der Polycarbonat-Vorläufer eine Verbindung der folgenden chemischen Formel A ist:

[Chemische Formel A]

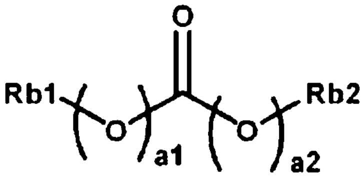

worin in der chemischen Formel A

Rb1 und Rb2 gleich oder voneinander verschieden sind und jeweils unabhängig eine Halogengruppe; eine substituierte oder unsubstituierte Alkylgruppe; oder eine substituierte oder unsubstituierte Arylgruppe sind, und a1 und a2 jeweils 0 oder 1 sind.

**11.** Polycarbonatharzzusammensetzung, umfassend das Polycarbonatharz gemäß irgendeinem der Ansprüche 1 bis 7.

**12.** Formartikel, umfassend die Polycarbonatharzzusammensetzung gemäß Anspruch 11.

## Revendications

**1.** Résine de polycarbonate comprenant une unité de la formule chimique 1 suivante :

[Formule chimique 1]

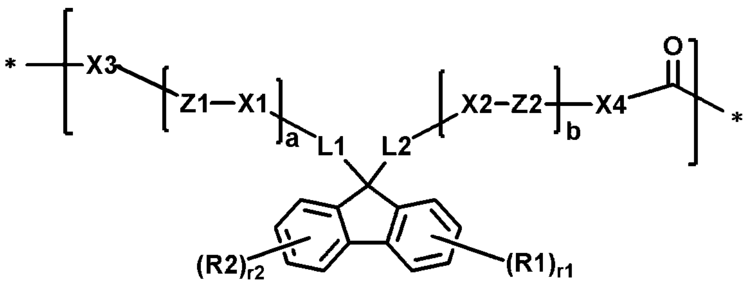

dans laquelle, dans la formule chimique 1,

R1 et R2 sont différents l'un de l'autre et représentent chacun, indépendamment, un atome d'hydrogène ; un atome de deutérium ; un groupe halogéno ; un groupe cyano ; un groupe alkyle substitué ou non substitué ; un groupe cycloalkyle substitué ou non substitué ; un groupe alcoxy substitué ou non substitué ; un groupe silyle substitué ou non substitué ; un groupe aryle non substitué ou substitué par un deutérium, un groupe halogène, un groupe hydroxyle, un groupe cyano, un groupe alkyle, un groupe cycloalkyle, un groupe alcoxy, un groupe alcényle, un groupe aryloxy, un groupe arylthio, un groupe alkylthio, un groupe aryle ou un groupe hétéroaryle ; ou un groupe hétéroaryle substitué ou non substitué,
r1 et r2 sont chacun un nombre entier de 1 à 4, et lorsque r1 est égal à 2 ou plus, deux ou plusieurs R1 sont identiques ou différents les uns des autres, et lorsque r2 est égal à 2 ou plus, deux ou plusieurs R2 sont identiques ou différents les uns des autres,
L1 et L2 sont identiques ou différents l'un de l'autre, et représentent chacun indépendamment un groupe arylène

substitué ou non substitué,
X1 et X2 sont identiques ou différents l'un de l'autre, et représentent chacun indépendamment O ; ou S,
X3 est O,
X4 est O,
Z1 et Z2 sont identiques ou différents l'un de l'autre, et représentent chacun indépendamment un groupe alkylène substitué ou non substitué ; ou un groupe cycloalkylène substitué ou non substitué,
a et b sont identiques ou différents l'un de l'autre, et représentent chacun indépendamment un nombre entier de 1 à 10, et lorsque a et b sont chacun égaux ou supérieurs à 2, les structures entre parenthèses sont identiques ou différentes l'une de l'autre, et
* désigne un fragment lié à la chaîne principale de la résine.

2. La résine de polycarbonate selon la revendication 1, comprenant en outre un motif de la formule chimique 2 suivante :

[Formule chimique 2]

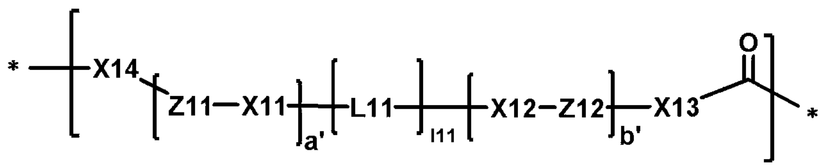

dans la formule chimique 2,

L11 représente un groupe alkylène substitué ou non substitué ; un groupe cycloalkylène substitué ou non substitué ; un groupe à cycle condensé divalent formé d'un cycle hydrocarboné aromatique et d'un cycle hydrocarboné aliphatique, qui est substitué ou non substitué ; ou un groupe arylène substitué ou non substitué,
l11 est un nombre entier de 1 à 5, et lorsque l11 est égal à 2 ou plus, deux ou plusieurs L11 sont identiques ou différents les uns des autres,
X11 à X14 sont identiques ou différents les uns des autres, et représentent chacun indépendamment O ; ou S, Z11 et Z12 sont identiques ou différents l'un de l'autre, et représentent chacun indépendamment un groupe alkylène substitué ou non substitué ; ou un groupe cycloalkylène substitué ou non substitué,
a' et b' sont identiques ou différents l'un de l'autre, et représentent chacun indépendamment un nombre entier de 0 à 10, et lorsque a' et b' sont chacun égaux ou supérieurs à 2, les structures entre parenthèses sont identiques ou différentes les unes des autres, et
* désigne un fragment lié à la chaîne principale de la résine.

3. La résine de polycarbonate selon la revendication 1,

dans laquelle R1 et R2 sont différents l'un de l'autre, et représentent chacun indépendamment un atome d'hydrogène ; ou un groupe aryle monocyclique ou polycyclique non substitué ayant de 6 à 30 atomes de carbone,
L1 et L2 sont identiques ou différents l'un de l'autre, et représentent chacun indépendamment un groupe arylène monocyclique ou polycyclique ayant de 6 à 30 atomes de carbone,
X1 à X4 représentent O, et
Z1 et Z2 sont identiques ou différents l'un de l'autre, et représentent chacun indépendamment un groupe alkylène à chaîne linéaire ou ramifiée ayant de 1 à 30 atomes de carbone.

4. La résine de polycarbonate selon la revendication 1, dans laquelle la résine de polycarbonate a un poids moléculaire moyen en poids (Mw) de 5000 g/mol à 500000 g/mol, déterminé par chromatographie par perméation de gel comme indiqué dans le mémoire descriptif.

5. La résine de polycarbonate selon la revendication 1, dans laquelle l'indice de réfraction de la résine de polycarbonate, mesuré à une longueur d'onde de 587 nm, est de 1,50 à 1,75, déterminé à l'aide d'un coupleur à prisme tel que décrit dans le mémoire descriptif.

6. La résine de polycarbonate selon la revendication 1, dans laquelle la résine de polycarbonate présente une température de transition vitreuse (Tg) de 90 °C à 200 °C, déterminée à l'aide d'un calorimètre différentiel à balayage, comme indiqué dans la description.

**7.** La résine de polycarbonate selon la revendication 1, dans laquelle l'indice d'Abbe de la résine de polycarbonate, mesuré à des longueurs d'onde de 486, 587 et 656 nm, est de 5 à 45 ;

dans laquelle l'indice d'Abbe est obtenu par la formule suivante :

$$\text{Nombre d'Abbe} = (n_D-1)/(n_F - n_C)$$

où $n_D$, $n_F$ et $n_C$ sont les indices de réfraction aux longueurs d'onde D : 587 nm, F : 486 nm et C : 656 nm, respectivement, chacun étant déterminé à l'aide d'un coupleur à prisme tel que décrit dans le cahier des charges.

**8.** Procédé de préparation de la résine de polycarbonate selon l'une quelconque des revendications 1 à 7, le procédé comprenant : la polymérisation d'une composition destinée à la préparation d'une résine de polycarbonate comprenant un composé de la formule chimique 1a suivante ; et
un précurseur de polycarbonate :

[Formule chimique 1a]

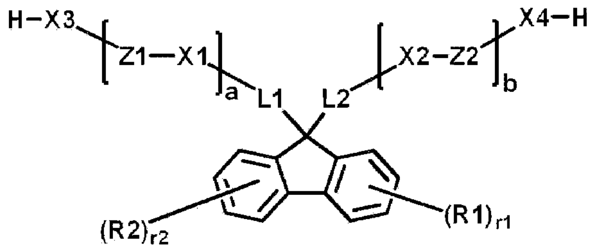

dans laquelle, dans la formule chimique 1a,

R1 et R2 sont différents l'un de l'autre et représentent chacun, indépendamment, un atome d'hydrogène ; un atome de deutérium ; un groupe halogéno ; un groupe cyano ; un groupe alkyle substitué ou non substitué ; un groupe cycloalkyle substitué ou non substitué ; un groupe alcoxy substitué ou non substitué ; un groupe silyle substitué ou non substitué ; un groupe aryle non substitué ou substitué par un deutérium, un groupe halogène, un groupe hydroxyle, un groupe cyano, un groupe alkyle, un groupe cycloalkyle, un groupe alcoxy, un groupe alcényle, un groupe aryloxy, un groupe arylthio, un groupe alkylthio, un groupe aryle ou un groupe hétéroaryle ; ou un groupe hétéroaryle substitué ou non substitué,
r1 et r2 sont chacun un nombre entier de 1 à 4, et lorsque r1 est égal ou supérieur à 2, deux ou plusieurs R1 sont identiques ou différents les uns des autres, et lorsque r2 est égal ou supérieur à 2, deux ou plusieurs R2 sont identiques ou différents les uns des autres,
L1 et L2 sont identiques ou différents l'un de l'autre, et représentent chacun indépendamment un groupe arylène substitué ou non substitué,
X1 et X2 sont identiques ou différents l'un de l'autre, et représentent chacun indépendamment O ; ou S,
X3 est O,
X4 est O, et
Z1 et Z2 sont identiques ou différents l'un de l'autre, et représentent chacun indépendamment un groupe alkylène substitué ou non substitué ; ou un groupe cycloalkylène substitué ou non substitué,
a et b sont identiques ou différents l'un de l'autre, et représentent chacun indépendamment un nombre entier de 1 à 10, et lorsque a et b sont chacun égaux ou supérieurs à 2, les structures entre parenthèses sont identiques ou différentes l'une de l'autre.

**9.** Le procédé selon la revendication 8, dans lequel la composition pour la préparation de la résine de polycarbonate comprend en outre un composé de la formule chimique 2a suivante, et les composés de formule chimique 1a et de formule chimique 2a sont présents en quantités de 0,01 % en moles à 100 % en moles : 99,99 % en moles et 0 % en moles :

[Formule chimique 2a]

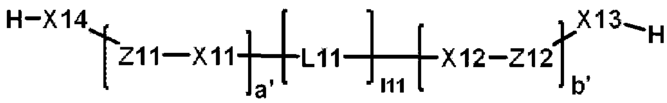

dans la formule chimique 2a,

L11 représente un groupe alkylène substitué ou non substitué ; un groupe cycloalkylène substitué ou non substitué ; un groupe à cycle condensé divalent formé d'un cycle hydrocarboné aromatique et d'un cycle hydrocarboné aliphatique, qui est substitué ou non substitué ; ou un groupe arylène substitué ou non substitué,
l11 est un nombre entier de 1 à 5, et lorsque l11 est égal à 2 ou plus, deux ou plusieurs L11 sont identiques ou différents les uns des autres,
X11 à X14 sont identiques ou différents les uns des autres, et représentent chacun indépendamment O ; ou S, Z11 et Z12 sont identiques ou différents l'un de l'autre, et représentent chacun indépendamment un groupe alkylène substitué ou non substitué ; ou un groupe cycloalkylène substitué ou non substitué,
a' et b' sont identiques ou différents l'un de l'autre, et représentent chacun indépendamment un nombre entier de 0 à 10, et lorsque a' et b' sont chacun égaux ou supérieurs à 2, les structures entre parenthèses sont identiques ou différentes les unes des autres.

**10.** Le procédé selon la revendication 8, dans lequel le précurseur de polycarbonate est un composé de la formule chimique A suivante :

[Formule chimique A]

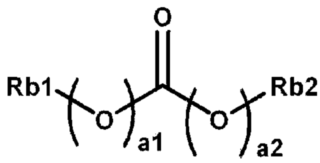

dans la formule chimique A,

Rb1 et Rb2 sont identiques ou différents l'un de l'autre, et représentent chacun, indépendamment, un groupe halogène ; un groupe alkyle substitué ou non substitué ; ou un groupe aryle substitué ou non substitué, et
a1 et a2 valent chacun 0 ou 1.

**11.** Composition de résine de polycarbonate comprenant la résine de polycarbonate selon l'une quelconque des revendications 1 à 7.

**12.** Article moulé comprenant la composition de résine de polycarbonate selon la revendication 11.

[Figure 1]

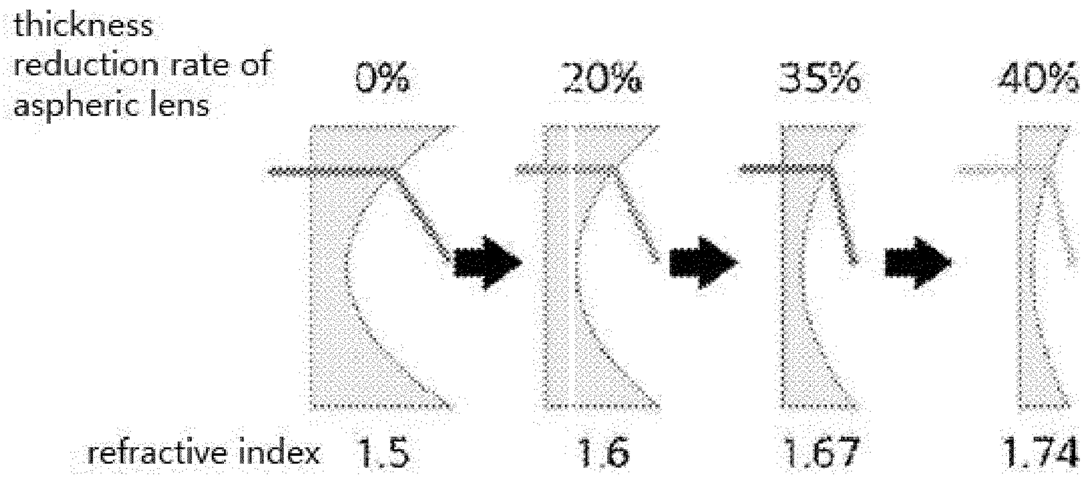
thickness
reduction rate of
aspheric lens
0%
20%
35%
40%
refractive index
1.5
1.6
1.67
1.74

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220035977
- JP 2020117610 A
- EP 3677614 A1
- CN 112250852 A